# EUROPEAN PATENT APPLICATION

(11) **EP 4 676 114 A1**
(43) Date of publication of application: **07.01.2026**
(21) Application number: 24781355.3
(22) Date of filing: 15.03.2024
(51) Int. Cl.: H04W 24/10, H04W 24/08, H04W 72/231, H04L 5/00

(54) **METHOD AND DEVICE FOR PROVIDING ADDITIONAL MEASUREMENT INFORMATION FOR CARRIER AGGREGATION IN WIRELESS COMMUNICATION SYSTEM**

(30) Priority: 30.03.2023 KR 20230041878
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR); JIN, Seungri, Suwon-si, Gyeonggi-do 16677 (KR)
(74) Representative: Nederlandsch Octrooibureau
(86) International application number: PCT/KR2024/095557
(87) International publication number: WO 2024/205366

(57) **Abstract**

The present invention relates to a method comprising the steps of: receiving, from a base station, measurement configuration information including first information for setting a plurality of measurement objects and second information for setting a report of a measurement object list; and transmitting, to the base station, the measurement object list including one or more measurement objects that have been measured from among the plurality of measurement objects, wherein the measurement object list includes cell information that has been measured for each of the one or more measurement objects.

## Description

### [Technical Field]

The disclosure relates to a wireless communication system (or mobile communication system). Specifically, the disclosure relates to a method and a device for providing measurement information for carrier aggregation (CA) in a wireless communication system (or mobile communication system).

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, as communication systems advance, the demand for improving carrier aggregation (CA) is growing, and there is a particular need to enhance the provision of measurement information related to carrier aggregation.

### [Disclosure of Invention]

### [Technical Problem]

The disclosure is to provide a method and a device for providing measurement information for CA in a wireless communication system (or mobile communication system).

### [Solution to Problem]

According to an embodiment for achieving the task, a method performed by a terminal includes receiving, from a base station, measurement configuration information including first information for configuring multiple measurement objects and second information for configuring reporting of a measurement object list, and transmitting, to the base station, the measurement object list including one or more measurement objects for which measurement has been performed among the multiple measurement objects, wherein the measurement object list includes cell information regarding cells in which measurement has been performed for each of the one or more measurement objects.

According to an embodiment for achieving the task, a method performed by a base station includes transmitting, to a terminal, measurement configuration information including first information for configuring multiple measurement objects and second information for configuring reporting of a measurement object list, and receiving, from the terminal, the measurement object list including one or more measurement objects for which measurement has been performed among the multiple measurement objects, wherein the measurement object list includes cell information regarding cells in which measurement has been performed for each of the one or more measurement objects.

According to an embodiment for achieving the task, a terminal includes a transceiver, and a controller connected to the transceiver, wherein the controller is configured to receive, from a base station, measurement configuration information including first information for configuring multiple measurement objects and second information for configuring reporting of a measurement object list, and transmit, to the base station, the measurement object list including one or more measurement objects for which measurement has been performed among the multiple measurement objects, and wherein the measurement object list includes cell information regarding cells in which measurement has been performed for each of the one or more measurement objects.

According to an embodiment for achieving the task, a base station includes a transceiver, and a controller connected to the transceiver, wherein the controller is configured to transmit, to a terminal, measurement configuration information including first information for configuring multiple measurement objects and second information for configuring reporting of a measurement object list, and receive, from the terminal, the measurement object list including one or more measurement objects for which measurement has been performed among the multiple measurement objects, and wherein the measurement object list includes cell information regarding cells in which measurement has been performed for each of the one or more measurement objects.

### [Advantageous Effects of Invention]

According to various embodiments proposed in the disclosure, measurement-related configuration information is efficiently providable in a wireless (or mobile) communication system employing CA. Accordingly, an additional measurement and reporting process is also efficiently providable, based on measurement-related configuration information in a wireless (or mobile) communication system employing CA.

### [Brief Description of Drawings]

FIG. 1 illustrates a structure of a long term evolution (LTE) system according to an embodiment of the disclosure.
FIG. 2 illustrates a radio protocol structure in an LTE system according to an embodiment of the disclosure.
FIG. 3 illustrates a structure of a next-generation mobile communication (or new radio (NR)) system according to an embodiment of the disclosure.
FIG. 4 illustrates a radio protocol structure of a next-generation mobile communication (or NR) system according to an embodiment of the disclosure.
FIG. 5 is a flowchart illustrating a process in which a terminal transmits a measurement result message to a base station according to an embodiment of the disclosure;
FIG. 6 is a flowchart illustrating a process in which a terminal transmits a measurement result message to a base station according to an embodiment of the disclosure;
FIG. 7 is a flowchart illustrating a process in which a terminal transmits a measurement result message to a base station according to an embodiment of the disclosure;
FIG. 8 is a flowchart illustrating a process in which a terminal transmits a measurement result message to a base station according to an embodiment of the disclosure;
FIG. 9 is a block diagram illustrating an internal structure of a UE according to an embodiment of the disclosure.
FIG. 10 is a block diagram illustrating a structure of an NR base station according to an embodiment of the disclosure.

### [Mode for the Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "next generation Node B (gNB)" for the sake of descriptive convenience. That is, a base station described as "eNB" may refer to "gNB".

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6GHz or 6GHz or more, instead of transmitting signals using a transmission bandwidth up to 20 MHz in a band of 2GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. Furthermore, based on determinations by those skilled in the art, the embodiments of the disclosure may also be applied to other communication systems through some modifications without significantly departing from the scope of the disclosure.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

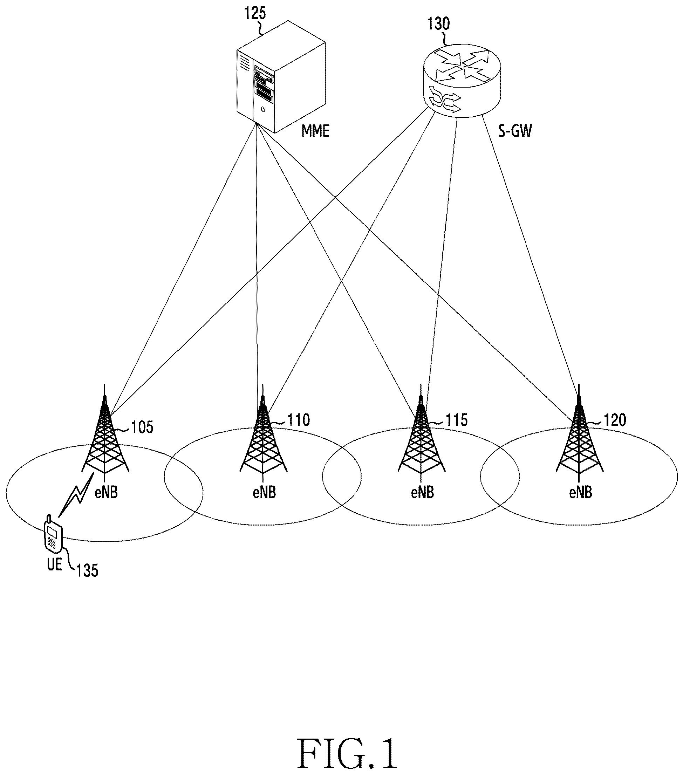

FIG. 1 illustrates a structure of an LTE system according to an embodiment of the disclosure.

Referring to FIG. 1, as illustrated therein, a radio access network of an LTE system includes evolved Node Bs (ENBs) 105, 110, 115, and 120, a mobility management entity (MME) 125, and a serving gateway (S-GW) 130. A user equipment (UE or terminal) 135 accesses an external network through the ENBs 105 to 120 and the S-GW 130.

In FIG. 1, the ENBs 105 to 120 correspond to conventional Node Bs of a universal mobile telecommunication system (UMTS). The ENBs are connected to the UE 135 through a radio channel, and perform more complicated roles than the conventional Node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 105 to 120 serve as the device. In general, one ENB controls multiple cells. For example, in order to implement a transfer rate of 100Mbps, the LTE system may use orthogonal frequency division multiplexing (OFDM) as a radio access technology in a bandwidth of, for example, 20MHz. Furthermore, the LTE system employs an adaptive modulation & coding (hereinafter referred to as AMC) scheme for determining a modulation scheme and a channel coding rate according to a channel state of a UE. The S-GW 130 is a device that provides a data bearer, and generates or removes a data bearer under the control of the MME 125. The MME is a device responsible for various control functions as well as a mobility management function for a UE, and is connected to multiple base stations.

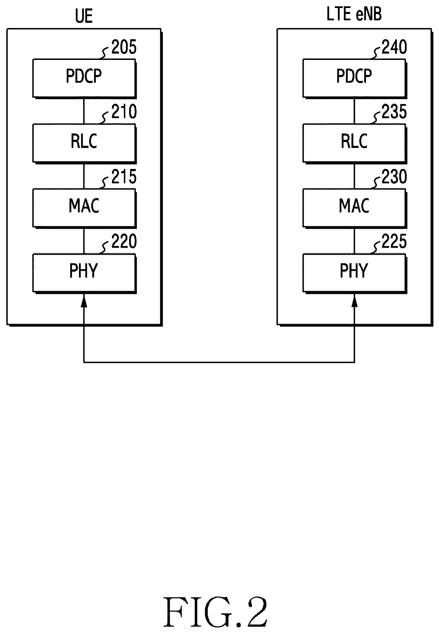

FIG. 2 illustrates a radio protocol structure in an LTE system according to an embodiment of the disclosure.

Referring to FIG. 2, a radio protocol of an LTE system includes a packet data convergence protocol (PDCP) 205 or 240, a radio link control (RLC) 210 or 235, and a medium access control (MAC) 215 or 230 on each of UE and ENB sides. The packet data convergence protocol (PDCP) 205 or 240 is responsible for operations such as IP header compression/reconstruction. The main functions of the PDCP are summarized as follows.
- Header compression and decompression: robust header compression (ROHC) only
- Transfer of user data
- In-sequence delivery of upper layer protocol data units (PDUs) at PDCP re-establishment procedure for RLC acknowledged mode (AM)
- For split bearers in DC (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (RLC) 210 or 235 reconfigures a PDCP protocol data unit (PDU) into appropriate sizes to perform an operation such as an automatic repeat request (ARQ) operation. The main functions of the RLC are summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 215 or 230 is connected to several RLC layer devices configured in a single UE, and performs operations of multiplexing RLC PDUs into an MAC PDU and demultiplexing RLC PDUs from an MAC PDU. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- HARQ (Error correction through HARQ)
- Priority handling between logical channels of one UE
- Priority handling between UEs by means of dynamic scheduling
- Multimedia broadcast/multicast service (MBMS) service identification
- Transport format selection
- Padding

A physical layer 220 or 225 performs operations of channel-coding and modulating upper layer data, thereby obtaining OFDM symbols, and delivering the same through a radio channel, or demodulating OFDM symbols received through the radio channel, channel-decoding the same, and delivering the same to the upper layer.

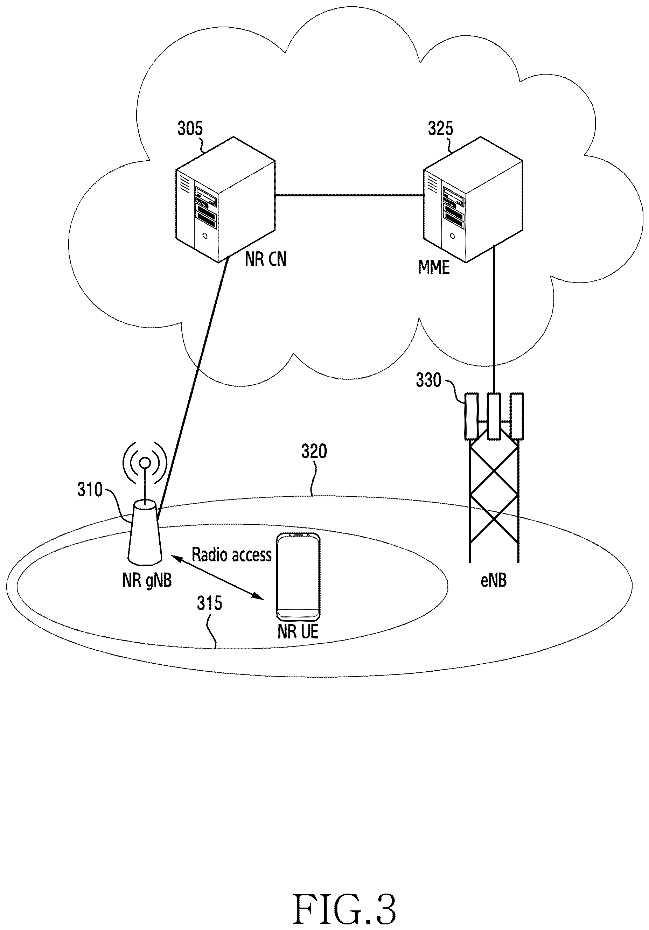

FIG. 3 illustrates a structure of a next-generation mobile communication system according to an embodiment of the disclosure.

Referring to FIG. 3, as illustrated therein, a radio access network of a next-generation mobile communication system (hereinafter NR or 5G) includes a next-generation base station (NR gNB or NR base station) 310, and a new radio core network (NR CN) 305. A user terminal (NR UE or NR terminal) 315 accesses an external network via the NR gNB 310 and the NR CN 305.

In FIG. 3, the NR gNB 310 corresponds to an evolved Node B (eNB) of a conventional LTE system. The NR gNB may be connected to the NR UE 315 through a radio channel and provide outstanding services as compared to a conventional node B. In the next-generation mobile communication system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the NR gNB 310 serves as the device. In general, one NR gNB controls multiple cells. The NR CN 305 performs functions such as mobility support, bearer configuration, and quality of service (QoS) configuration. The NR CN is a device responsible for various control functions as well as a mobility management function for a UE, and is connected to multiple base stations. In addition, the next-generation mobile communication system may interwork with the existing LTE system, and the NR CN is connected to an MME 325 via a network interface. The MME is connected to an eNB 330 that is an existing base station.

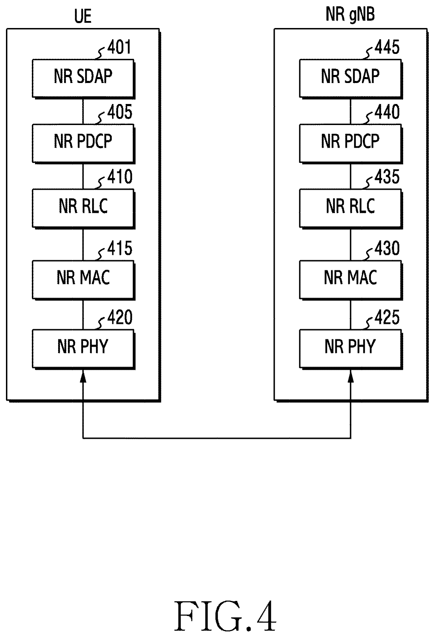

FIG. 4 illustrates a radio protocol structure of a next-generation mobile communication system according to an embodiment of the disclosure.

Referring to FIG. 4, a radio protocol of a next-generation mobile communication system includes an NR service data adaptation protocol (SDAP) 401 or 445, an NR PDCP 405 or 440, an NR RLC 410 or 435, and an NR MAC 415 or 430 on each of NR UE and NR gNB sides.

The main functions of the NR SDAP 401 or 445 may include some of functions below.
- Transfer of user plane data
- Mapping between a QoS flow and a data radio bearer (DRB) for both downlink (DL) and uplink (UL)
- Marking QoS flow ID in both DL and UL packets
- Reflective QoS flow to DRB mapping for the UL SDAP PDUs

With regard to the SDAP layer device, the UE may be configured, through a radio resource control (RRC) message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 405 or 440 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 410 or 435 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery of the NR RLC device refers to a function of successively delivering RLC SDUs, received from the lower layer, to the higher layer, and may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, may include a function of requesting retransmission of the lost RLC PDUs, may include a function of, if there is a lost RLC SDU, successively delivering only RLC SDUs before the lost RLC SDU to the higher layer, may include a function of, if a predetermined timer has expired although there is a lost RLC SDU, successively delivering all RLC SDUs received before the timer was started to the higher layer, and may include a function of, if a predetermined timer has expired although there is a lost RLC SDU, successively delivering all currently received RLC SDUs to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 415 or 430 may be connected to multiple NR RLC layer devices configured in a single UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY 420 or 425 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

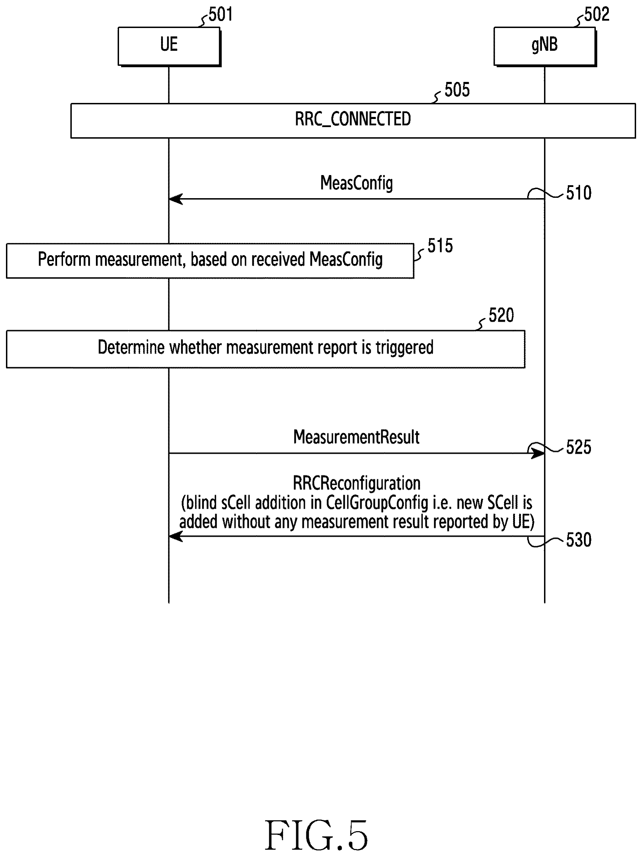

FIG. 5 is a flowchart illustrating a process in which a UE transmits a measurement result message to a base station according to an embodiment of the disclosure.

Referring to FIG. 5, a UE 501 may establish an RRC connection with an NR base station 502 and be in an RRC connected mode (RRC_CONNECTED) (operation *505).*

In operation 510, the base station 502 may transmit a predetermined RRC message (e.g., RRCReconfiguration) including measurement configuration information (MeasConfig) to the UE 501. The measurement configuration information may include information to be measured by the UE, and configuration information of measurement gaps. Specifically, the measurement configuration information may include information to be measured by the UE, and configuration information of measurement gaps. For example, the measurement configuration information may include at least one of measurement objects, reporting configurations, measurement identifiers (identities), measurement filtering configuration information (quantity configurations), and measurement gap configuration information (measurement gaps), and descriptions for each parameter is as shown in Table 1 below.

**[Table 1]**

| | |
|---|---|
| **1. Measurement objects:** A list of objects on which the UE shall perform the measurements. | |
| | - For intra-frequency and inter-frequency measurements a measurement object indicates the frequency/time location and subcarrier spacing of |
| | reference signals to be measured. Associated with this measurement object, the network may configure a list of cell specific offsets, a list of 'exclude-listed' cells and a list of 'allow-listed' cells. Exclude-listed cells are not applicable in event evaluation or measurement reporting. Allow-listed cells are the only ones applicable in event evaluation or measurement reporting. |
| | - The *measObjectId* of the MO which corresponds to each serving cell is indicated by *servingCellMO* within the serving cell configuration. |
| | - For inter-RAT E-UTRA measurements a measurement object is a single E-UTRA carrier frequency. Associated with this E-UTRA carrier frequency, the network can configure a list of cell specific offsets and a list of 'exclude-listed' cells. Exclude-listed cells are not applicable in event evaluation or measurement reporting. |
| | - For inter-RAT UTRA-FDD measurements a measurement object is a set of cells on a single UTRA-FDD carrier frequency. |
| | - For NR sidelink measurements of L2 U2N Relay UEs, a measurement object is a single NR sidelink frequency to be measured. |
| | - For CBR measurement of NR sidelink communication, a measurement object is a set of transmission resource pool(s) on a single carrier frequency for NR sidelink communication. |
| | - For CBR measurement of NR sidelink discovery, a measurement object is a set of discovery dedicated resource pool(s) or transmission resource pool(s) also used for NR sidelink discovery on a single carrier frequency for NR sidelink discovery. |
| | - For CLI measurements a measurement object indicates the frequency/time location of SRS resources and/or CLI-RSSI resources, and subcarrier spacing of SRS resources to be measured. |
| **2. Reporting configurations:** A list of reporting configurations where there can be one or multiple reporting configurations per measurement object. Each measurement reporting configuration consists of the following: | |
| | - Reporting criterion: The criterion that triggers the UE to send a measurement report. This can either be periodical or a single event description. |
| | - RS type: The RS that the UE uses for beam and cell measurement results (SS/PBCH block or CSI-RS). |
| | - Reporting format: The quantities per cell and per beam that the UE includes in the measurement report (e.g. RSRP) and other associated information such as the maximum number of cells and the maximum number beams per cell to report. |
| | In case of conditional reconfiguration, each configuration consists of the following: |
| | - Execution criteria: The criteria the UE uses for conditional reconfiguration execution. |

| | |
|---|---|
| | - RS type: The RS that the UE uses for obtaining beam and cell measurement results (SS/PBCH block-based or CSI-RS-based), used for evaluating conditional reconfiguration execution condition. |
| **3. Measurement identities:** For measurement reporting, a list of measurement identities where each measurement identity links one measurement object with one reporting configuration. By configuring multiple measurement identities, it is possible to link more than one measurement object to the same reporting configuration, as well as to link more than one reporting configuration to the same measurement object. The measurement identity is also included in the measurement report that triggered the reporting, serving as a reference to the network. For conditional reconfiguration triggering, one measurement identity links to exactly one conditional reconfiguration trigger configuration. And up to 2 measurement identities can be linked to one conditional reconfiguration execution condition. | |
| **4. Quantity configurations:** The quantity configuration defines the measurement filtering configuration used for all event evaluation and related reporting, and for periodical reporting of that measurement. For NR measurements, the network may configure up to 2 quantity configurations with a reference in the NR measurement object to the configuration that is to be used. In each configuration, different filter coefficients can be configured for different measurement quantities, for different RS types, and for measurements per cell and per beam. | |
| **5. Measurement gaps:** Periods that the UE may use to perform measurements. | |

For reference, the base station may indicate the UE to measure a frequency (intra-frequency) to which a special cell (SpCell) belongs, a frequency (inter-frequency) adjacent to the SpCell, and frequencies using a radio access technology (RAT) different from that of the SpCell. The SpCell may include a primary cell (PCell) when the base station is a master node (MN), and may include a primary secondary cell group (SCG) cell (PSCell) of a secondary node (SN) when the base station and the UE are configured for dual connectivity (DC). Detailed information on the measurement configuration information may be represented as an ASN.1 structure shown in Table 2 below.

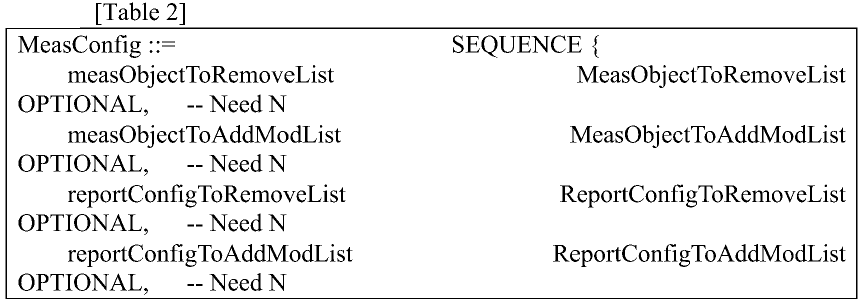

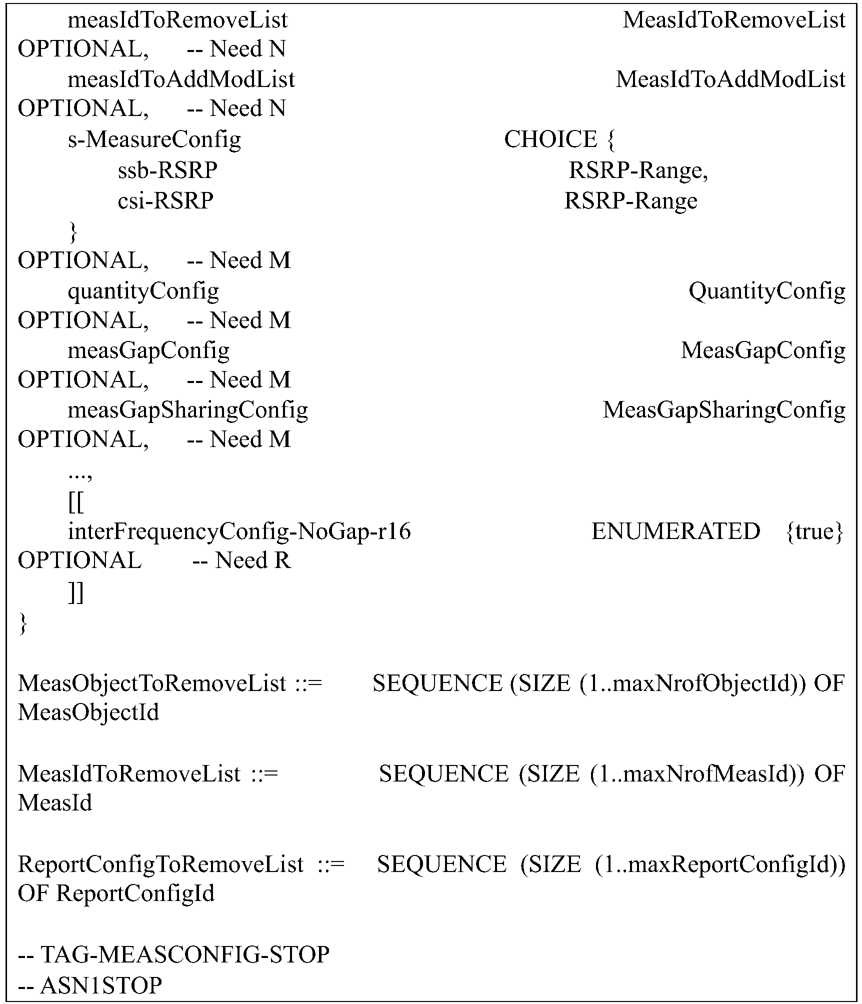

| ***MeasConfig* field descriptions** |
|---|
| ***interFrequencyConfig-NoGap-r16*** |
| If the field is set to true, UE is configured to perform SSB based inter-frequency measurement without measurement gaps when the inter-frequency SSB is completely contained in the active DL BWP of the UE, as specified in TS 38.133 [14], clause 9.3. Otherwise, the SSB based inter-frequency measurement is performed within measurement gaps. In NR-DC, the field can only be configured |
| in the *measConfig* associated with MCG, and when configured, it applies to all the inter-frequency measurements configured by MN and SN. |
| ***measGapConfig*** |
| Used to setup and release measurement gaps in NR. |
| ***measldToAddModList*** |
| List of measurement identities to add and/or modify. |
| ***measldToRemoveList*** |
| List of measurement identities to remove. |
| ***measObjectToAddModList*** |
| List of measurement objects to add and/or modify. |
| ***measObjectToRemoveList*** |
| List of measurement objects to remove. |
| ***reportConfigToAddModList*** |
| List of measurement reporting configurations to add and/or modify. |
| ***reportConfigToRemoveList*** |
| List of measurement reporting configurations to remove. |
| ***s-MeasureConfig*** |
| Threshold for NR SpCell RSRP measurement controlling when the UE is required to perform measurements on non-serving cells. Choice of *ssb-RSRP* corresponds to cell RSRP based on SS/PBCH block and choice of *csi-RSRP* corresponds to cell RSRP of CSI-RS. |
| ***measGapSharingConfig*** |
| Specifies the measurement gap sharing scheme and controls setup/ release of measurement gap sharing. |

In operation 515, the UE 501 may perform measurement, based on the measurement configuration information received from the base station 502 in operation 510. For example, the UE may perform measurement by applying measurement gap configuration information (measGapConfig) included in the measurement configuration information, or may perform measurement without measurement gap configuration information (e.g., when interFrequencyConfig-NoGap is configured and an inter-frequency synchronization signal and physical broadcast channel block (SSB) belongs to an active downlink bandwidth part of the UE). Specifically, the UE may perform measurement through the procedure of Table 3 below.

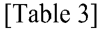

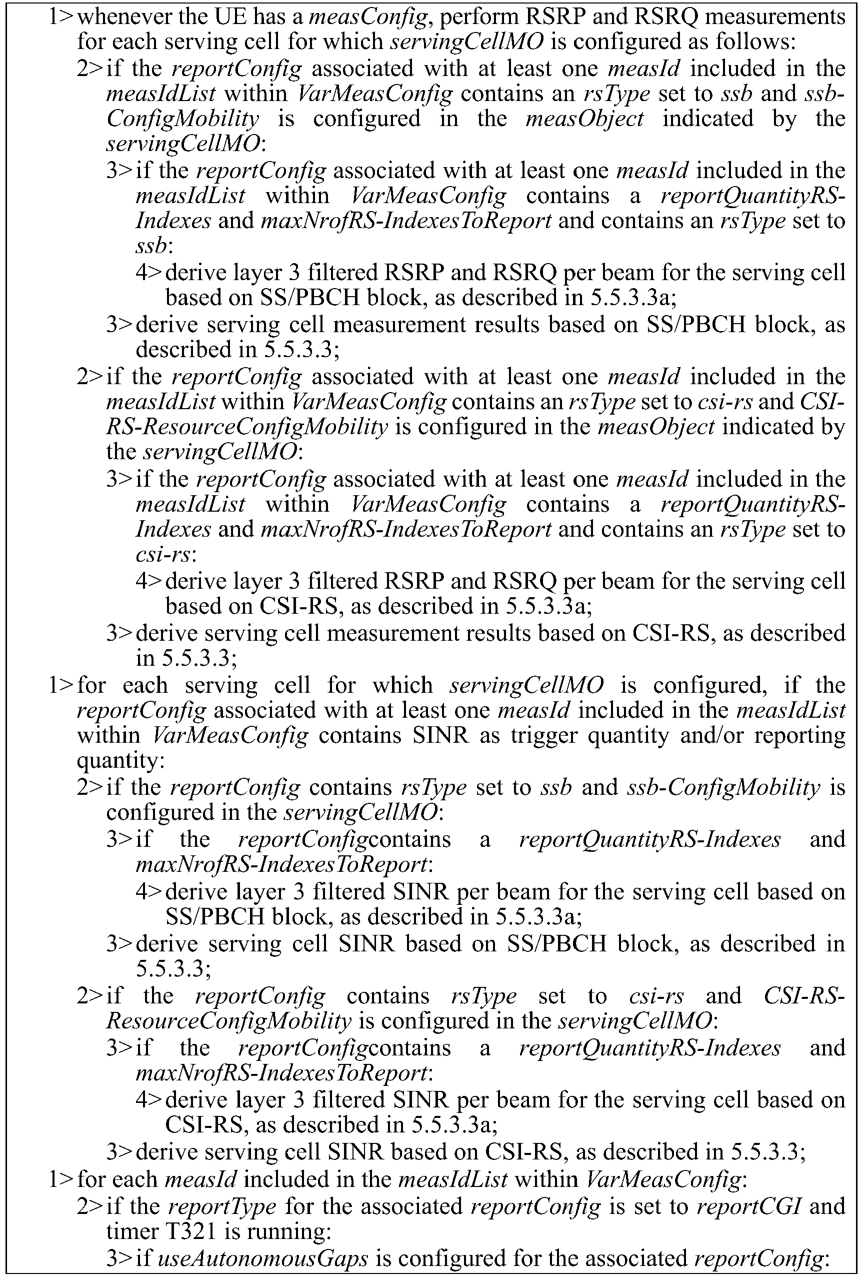

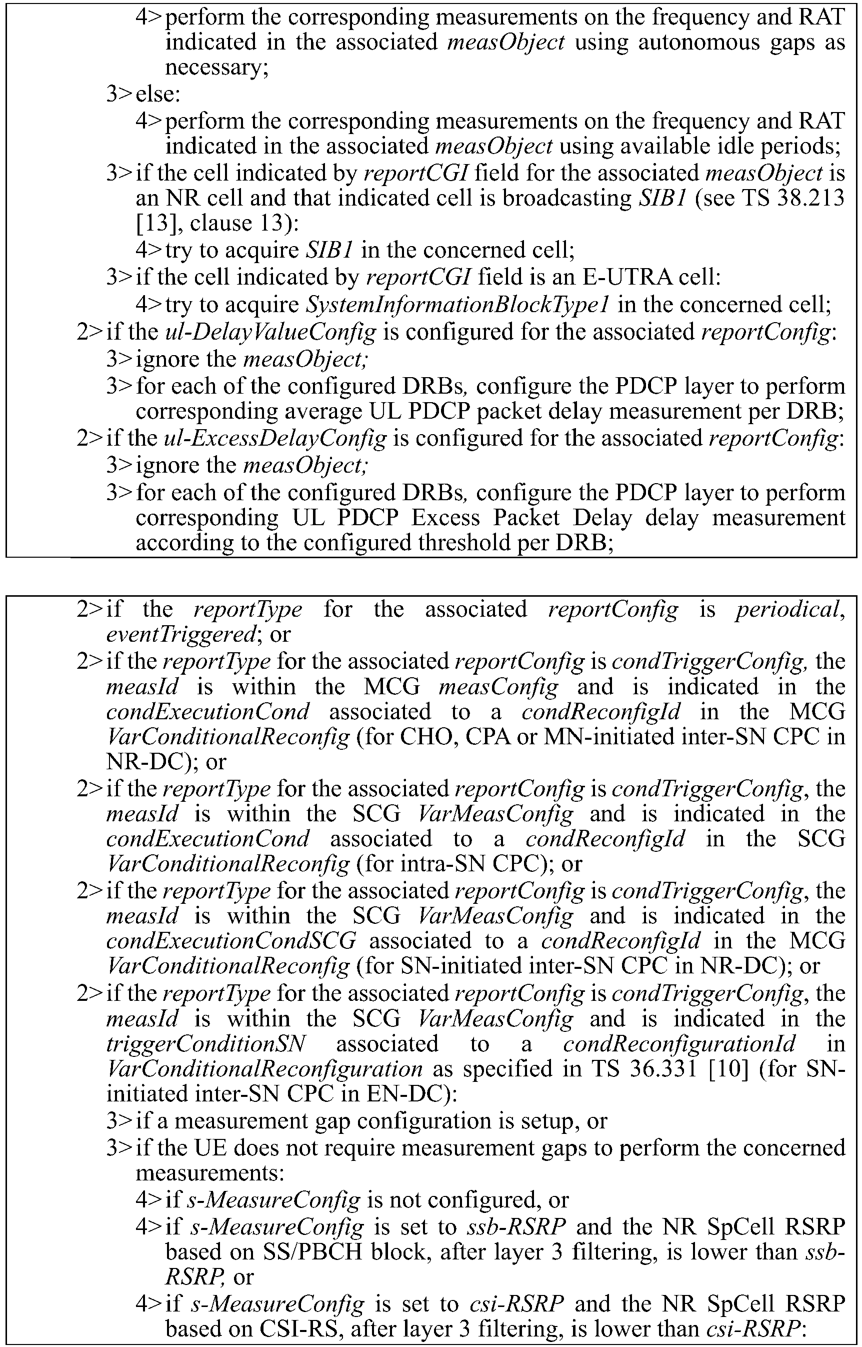

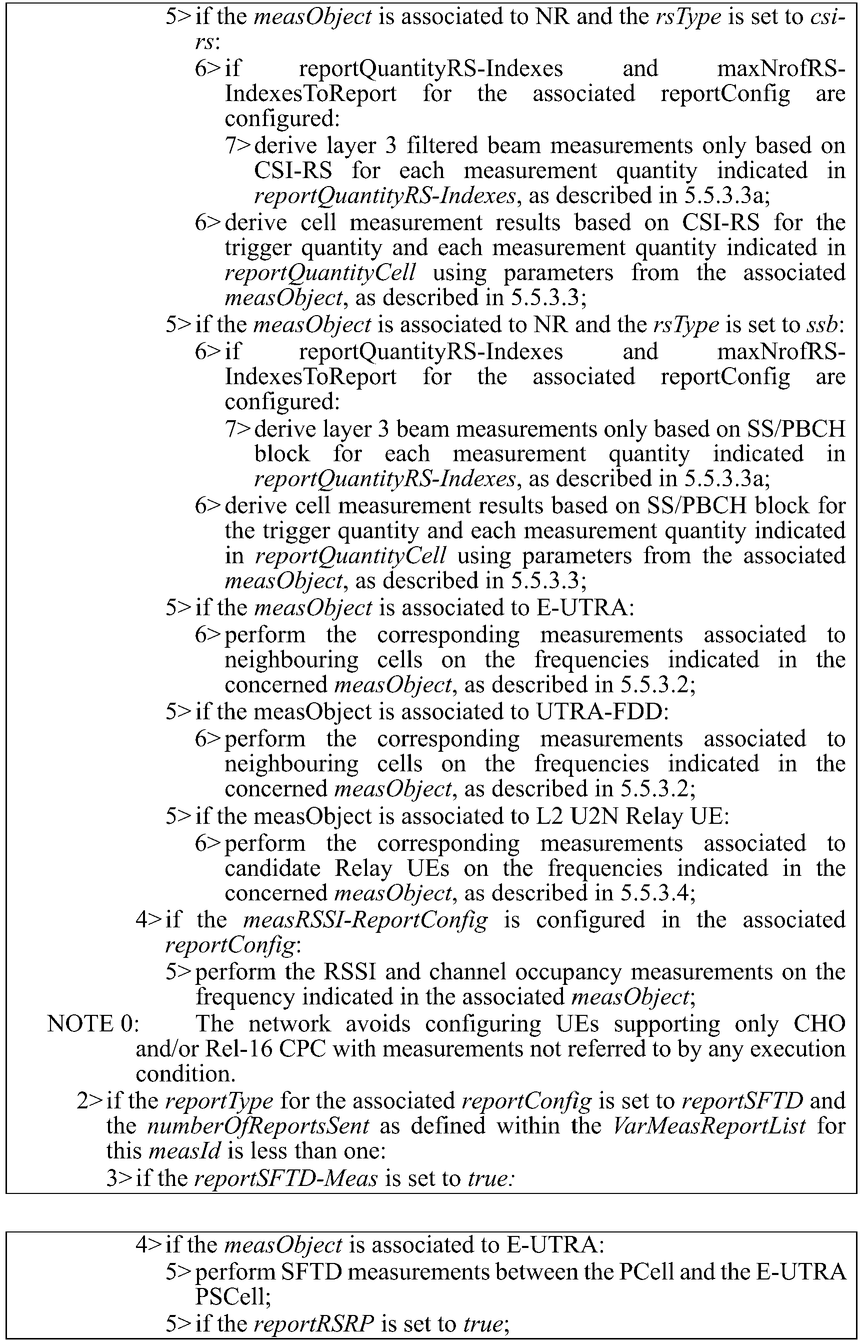

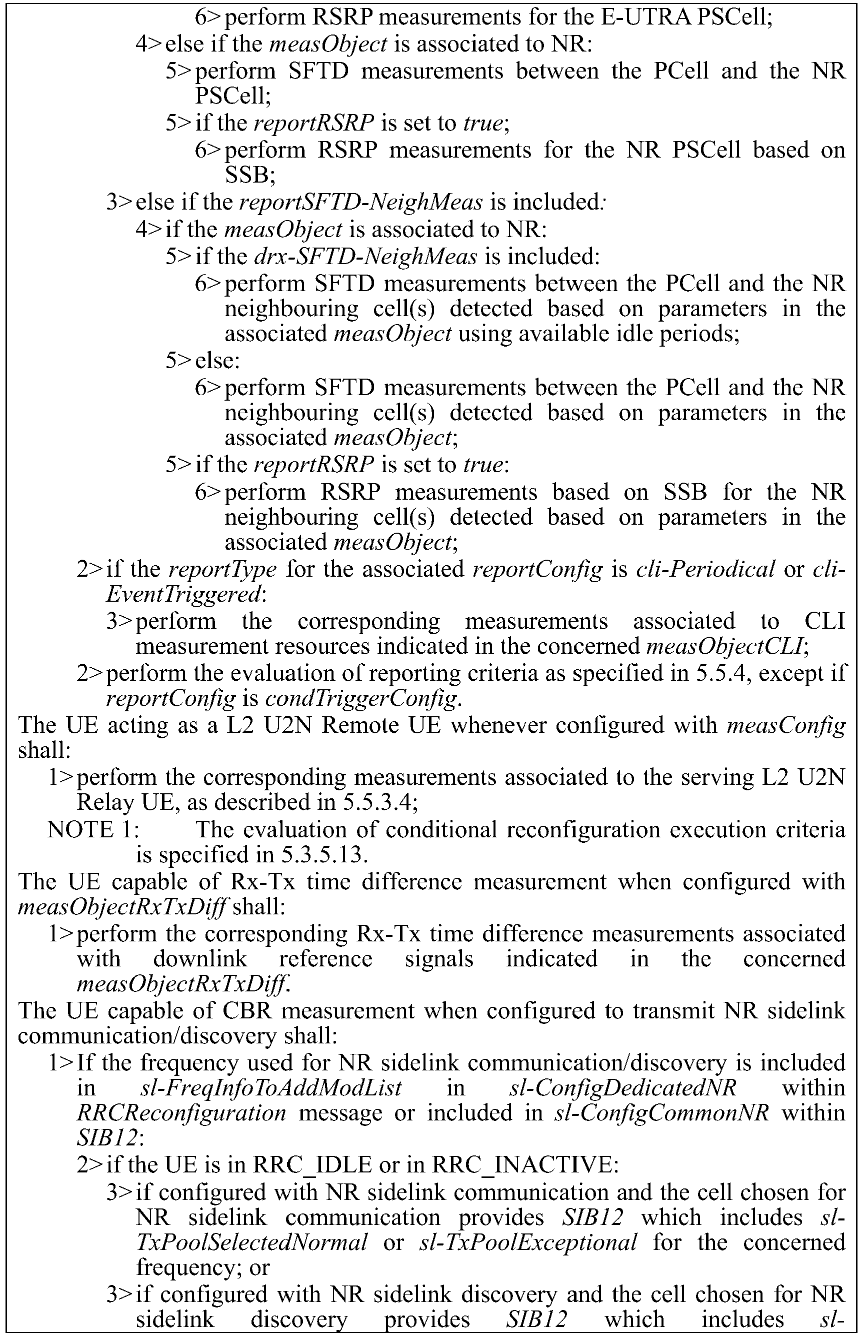

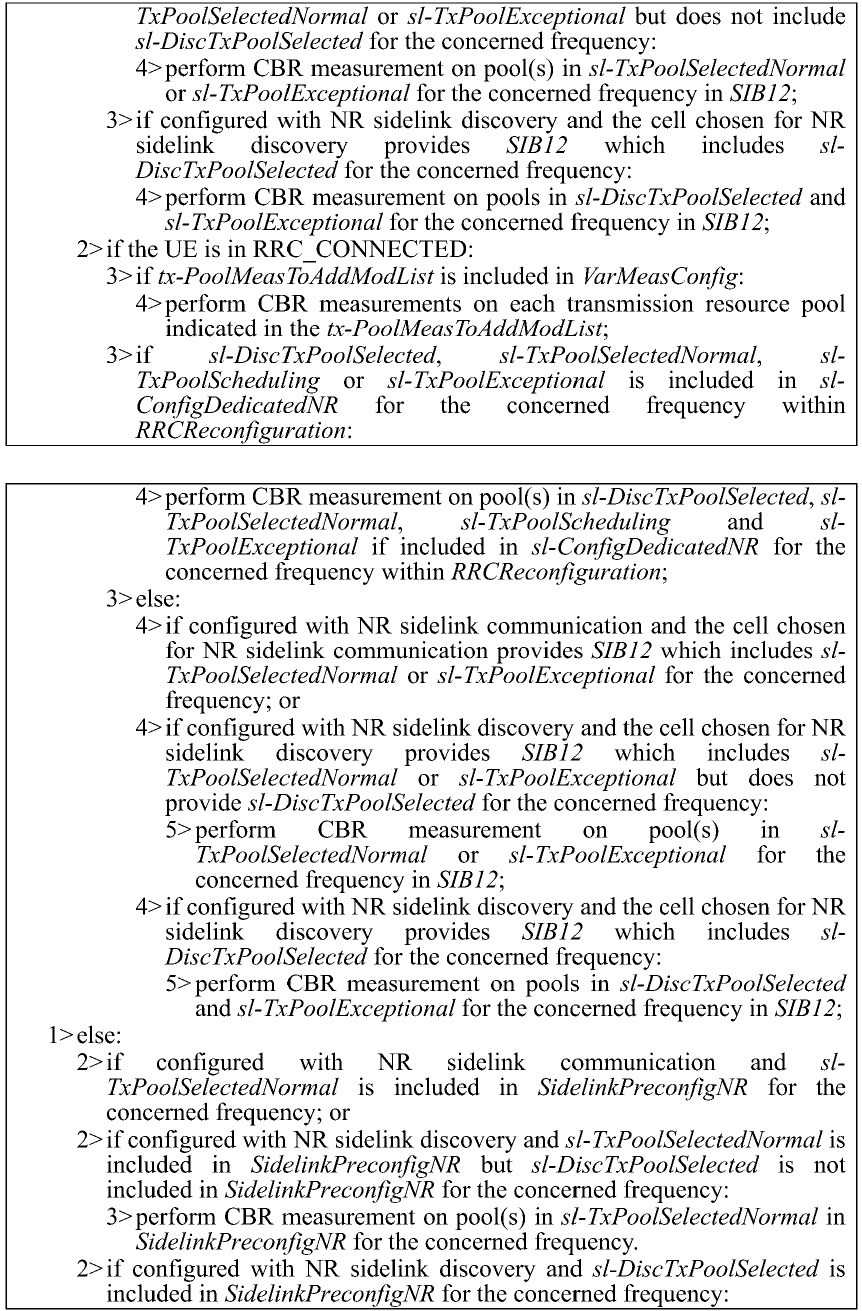

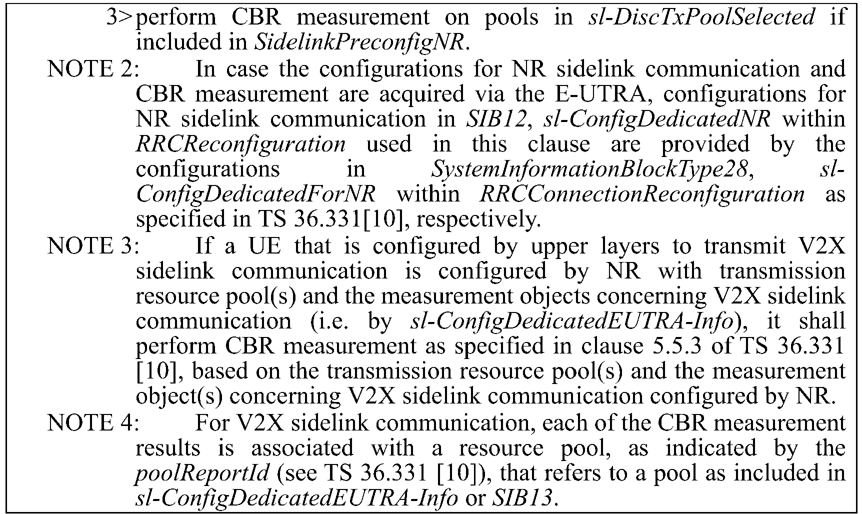

When the UE performs measurement through the above procedure, a method of performing layer 3 filtering by the UE (layer 3 filtering), a method of deriving a cell measurement result (derivation of cell measurement results), and a method of deriving a layer 3 beam-filtered measurement result (derivation of layer 3 beam filtered measurement) may follow the procedures described in [Table 4] below, respectively.

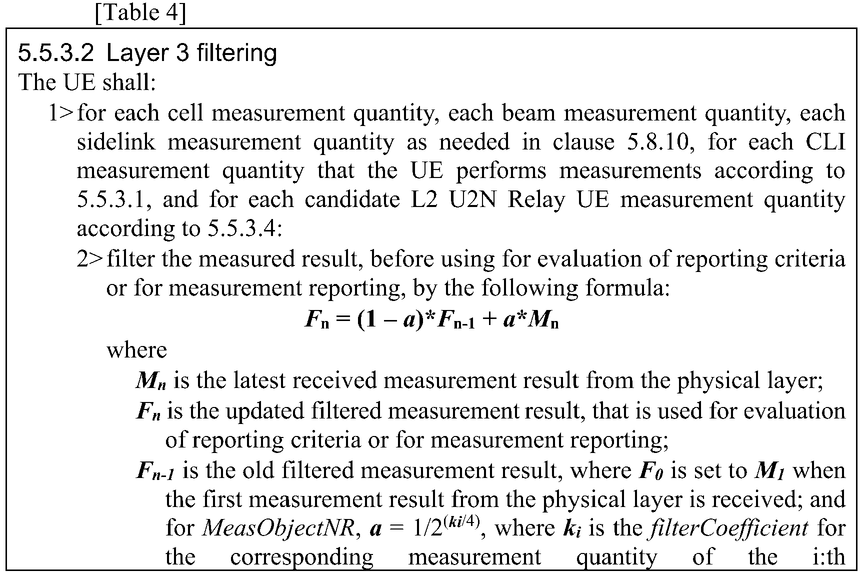

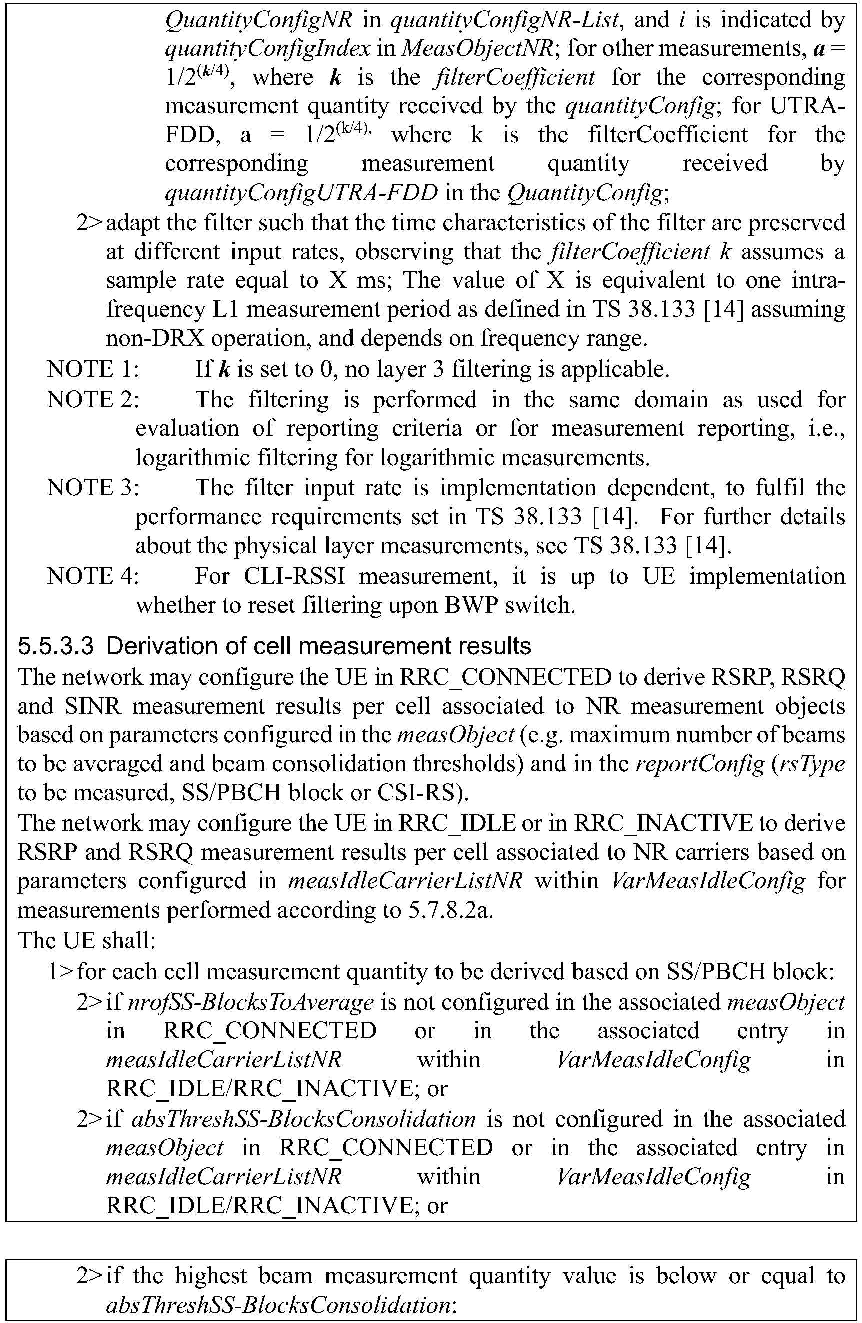

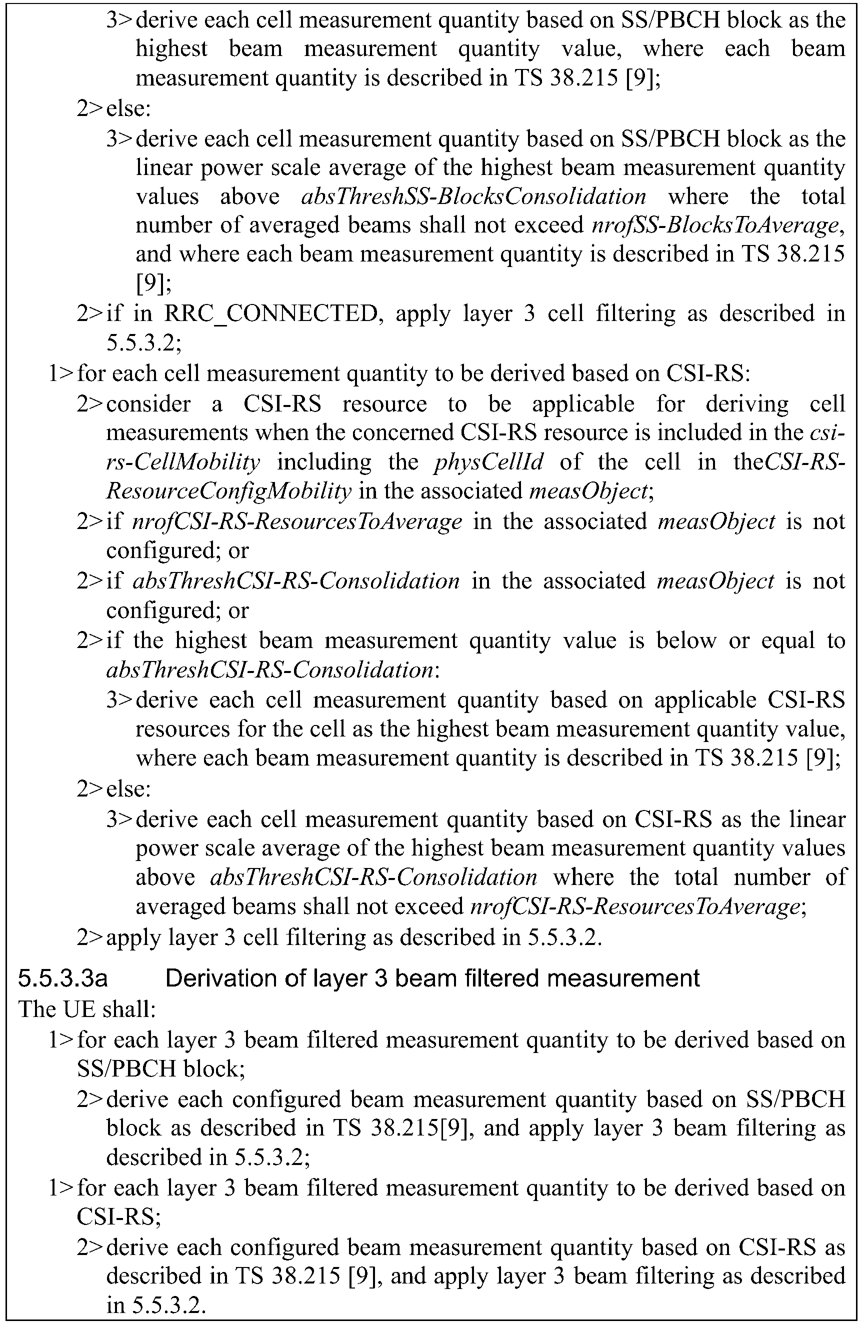

In operation 520, the UE 501 may determine, based on a result of the measurement in operation 515, whether a condition for reporting a measurement result message (MeasurementReport) to the base station 502 is triggered. The measurement report triggering condition may be event-based or periodic-based. For example, the measurement configuration information received in operation 510 includes one or multiple values of measObjectNR, reportConfigNR, measId, and each measId is mapped to a particular measObjectNR and a particular reportConfigNR. Therefore, the UE determines whether a reporting condition (criterion) specified in a particular reportConfig is satisfied and, if the condition is satisfied, the UE may transmit, to the base station, a measurement result report message (MeasurementReport) including a measId mapped to the reportConfig and a measurement result associated with the measId. Specifically, the UE may determine whether a measurement result is triggered through the procedure of Table 5 below.

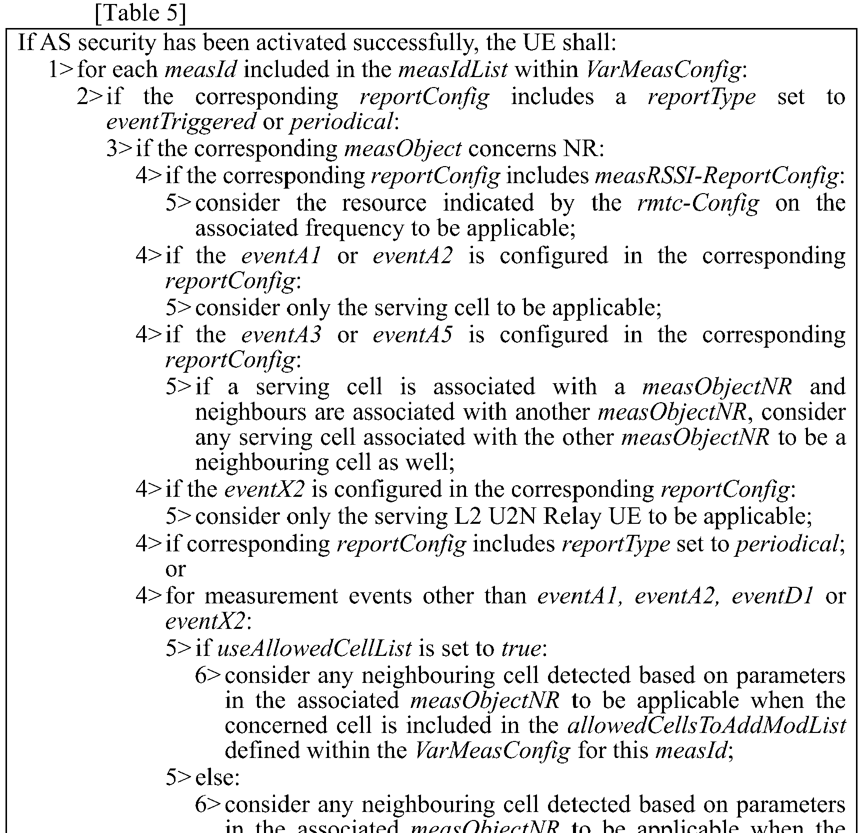

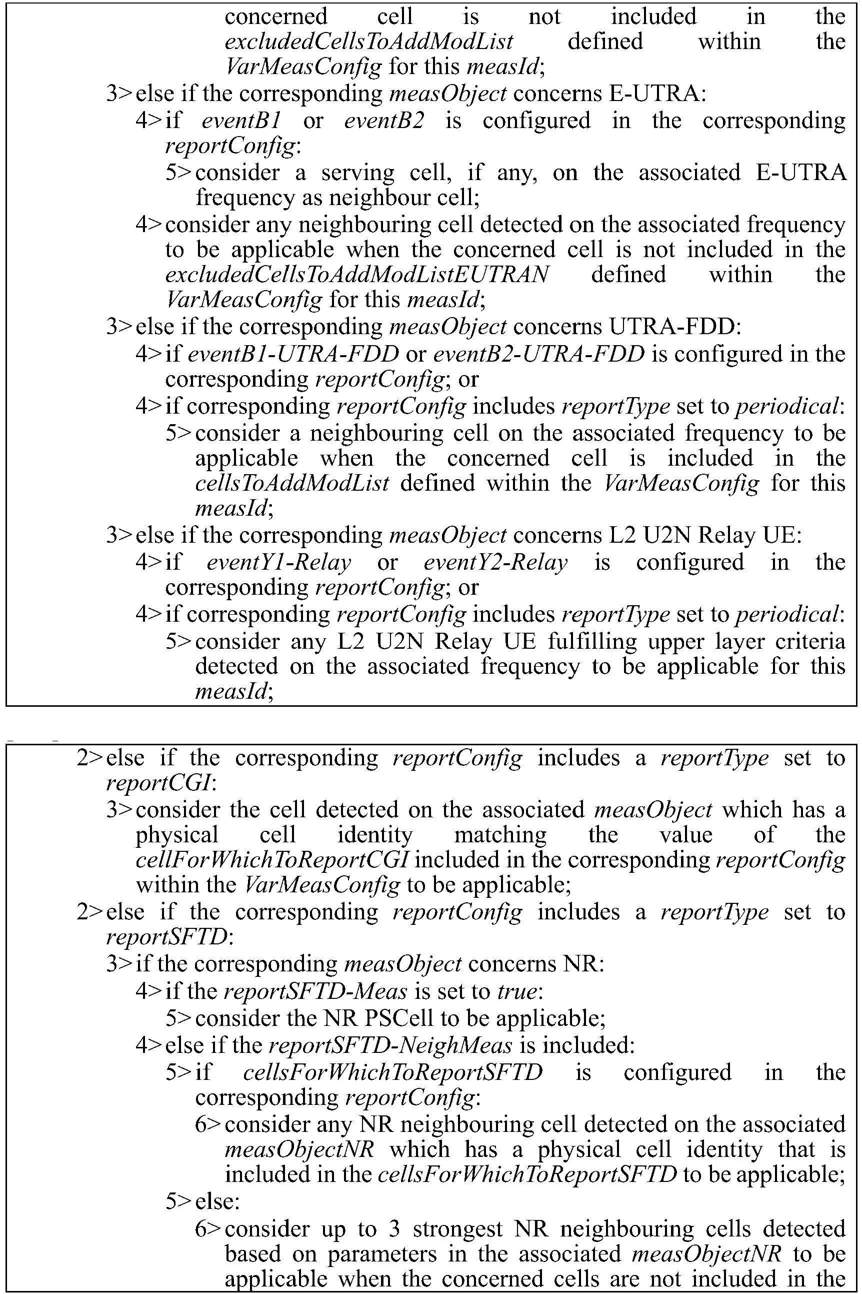

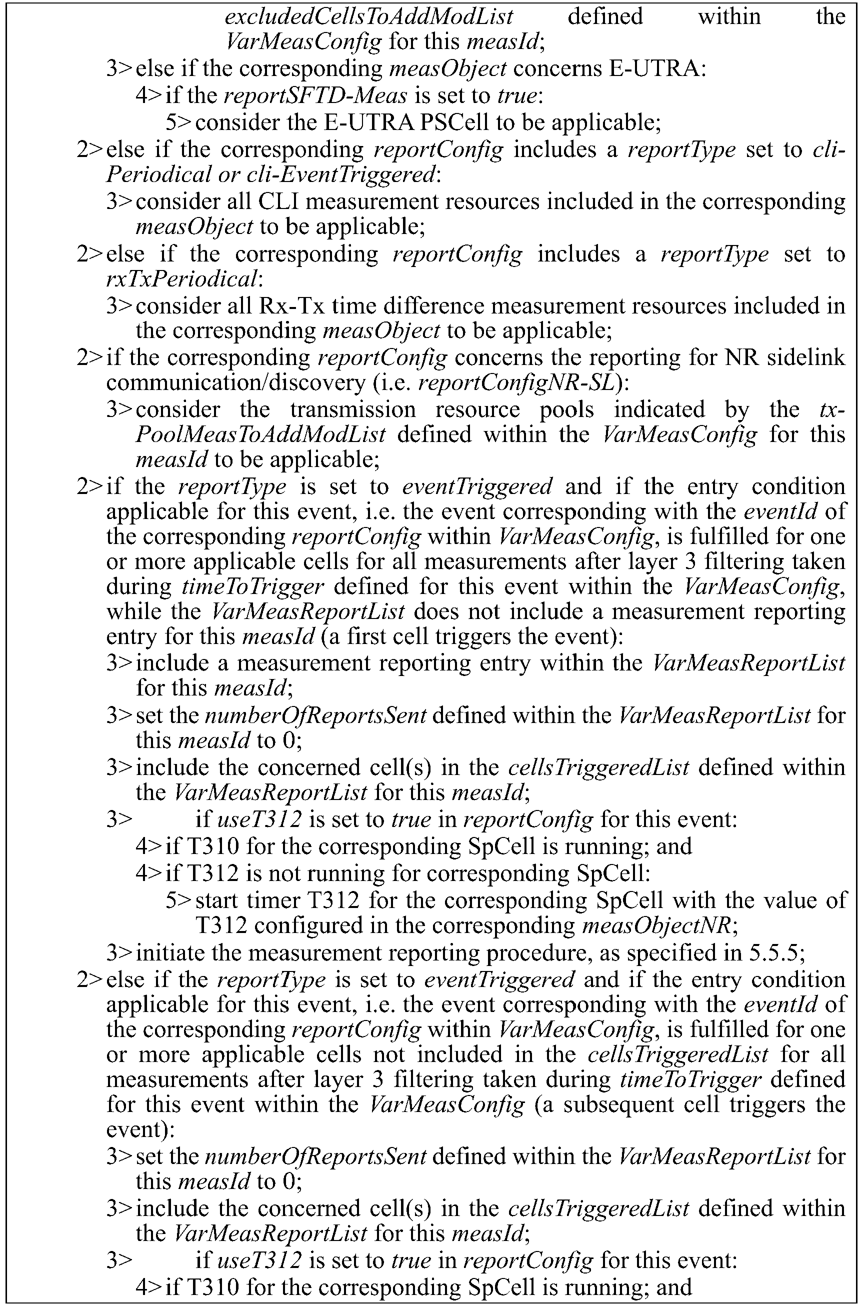

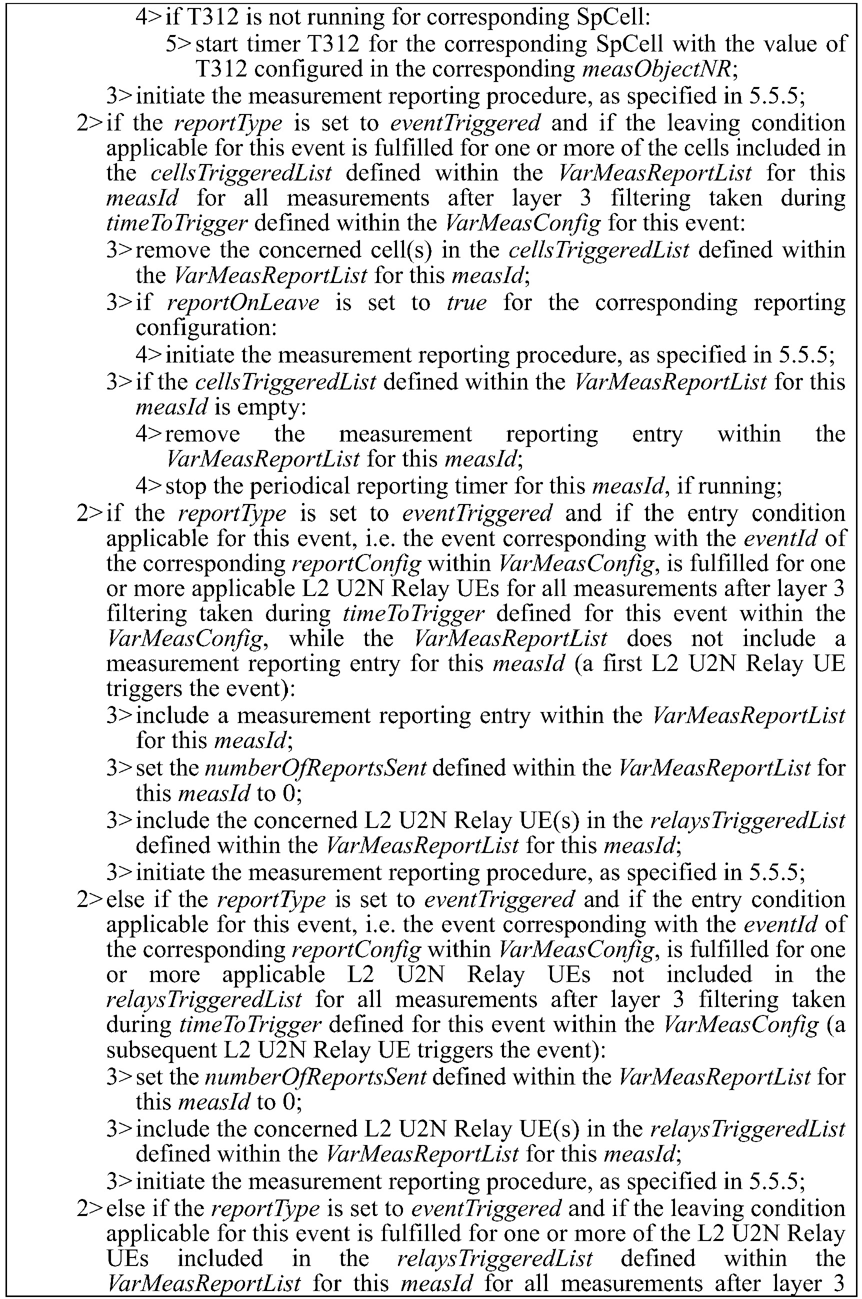

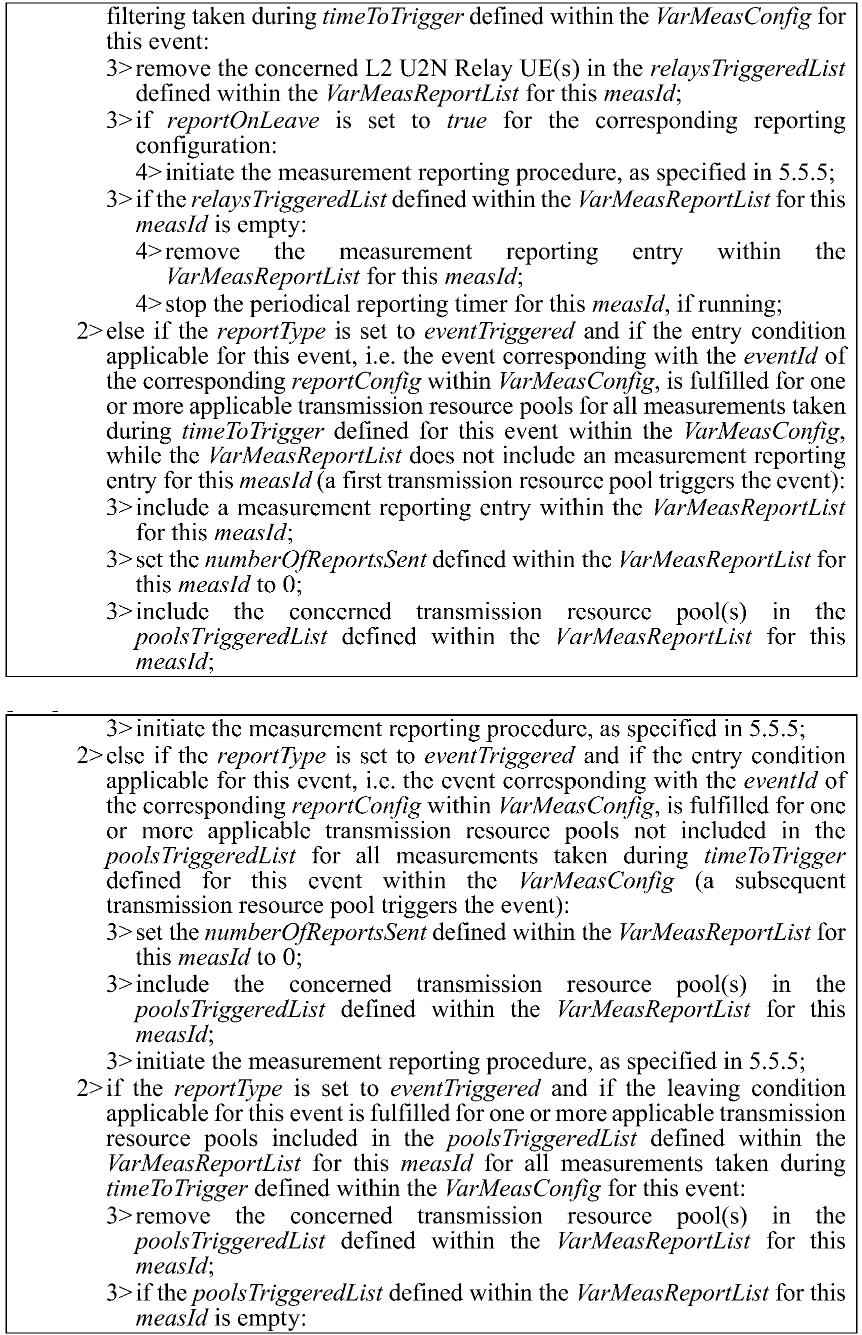

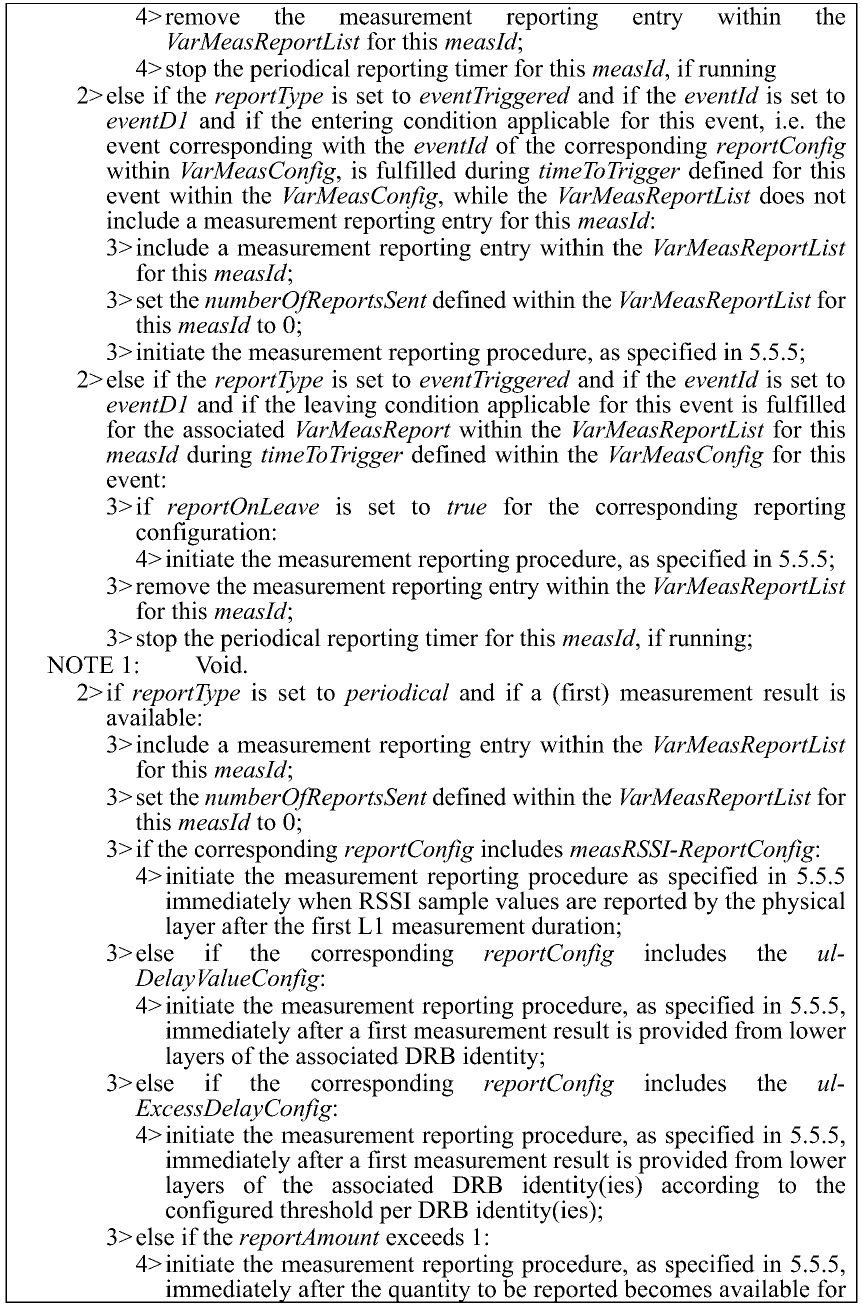

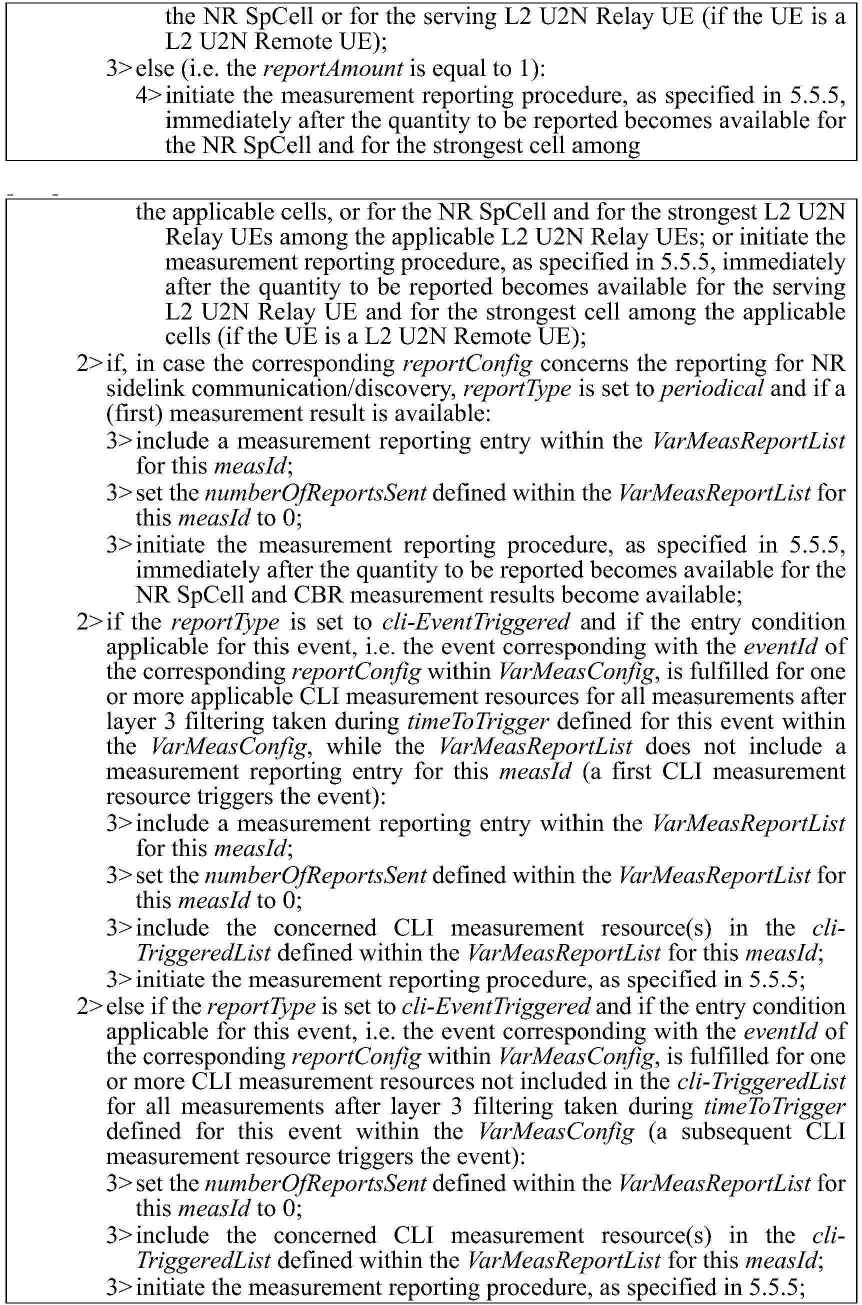

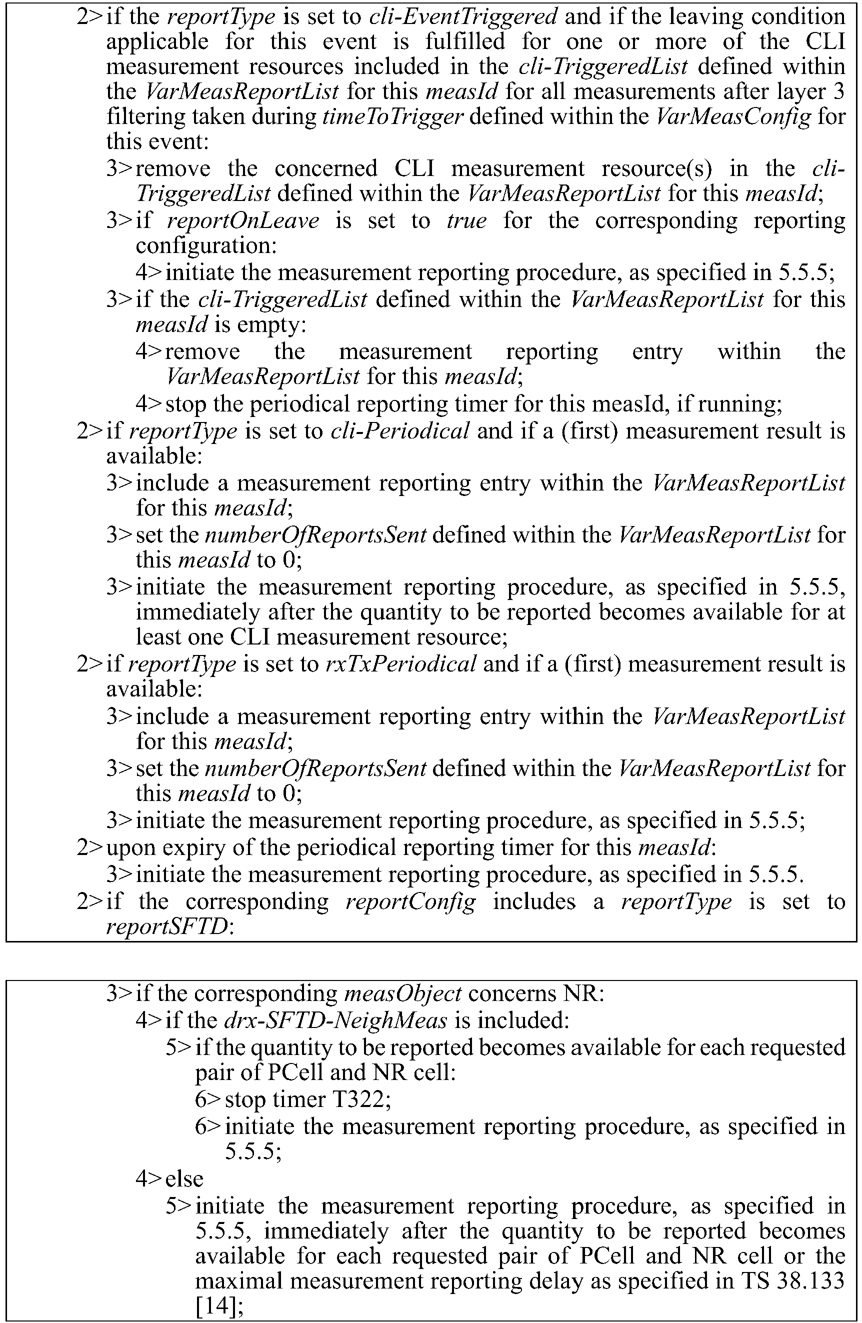

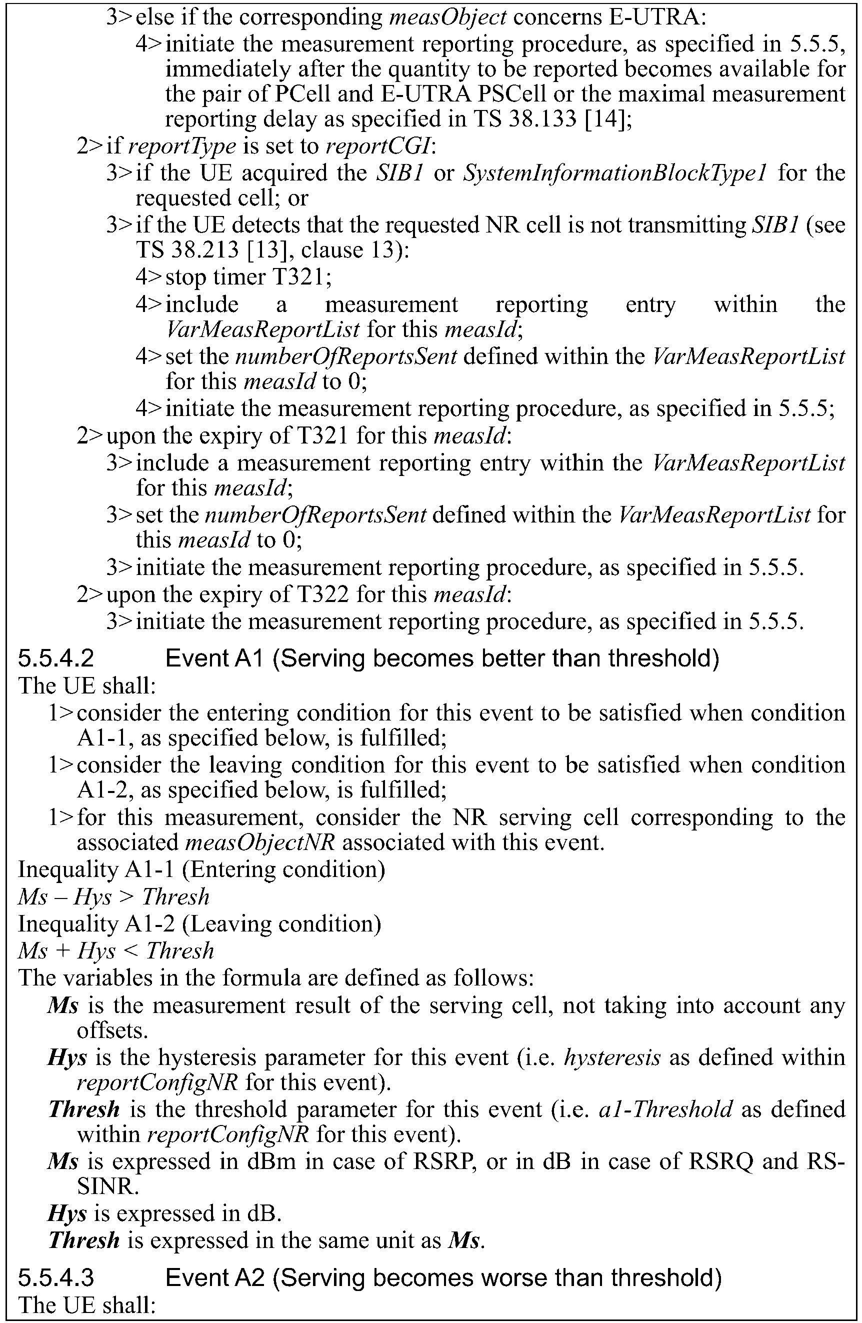

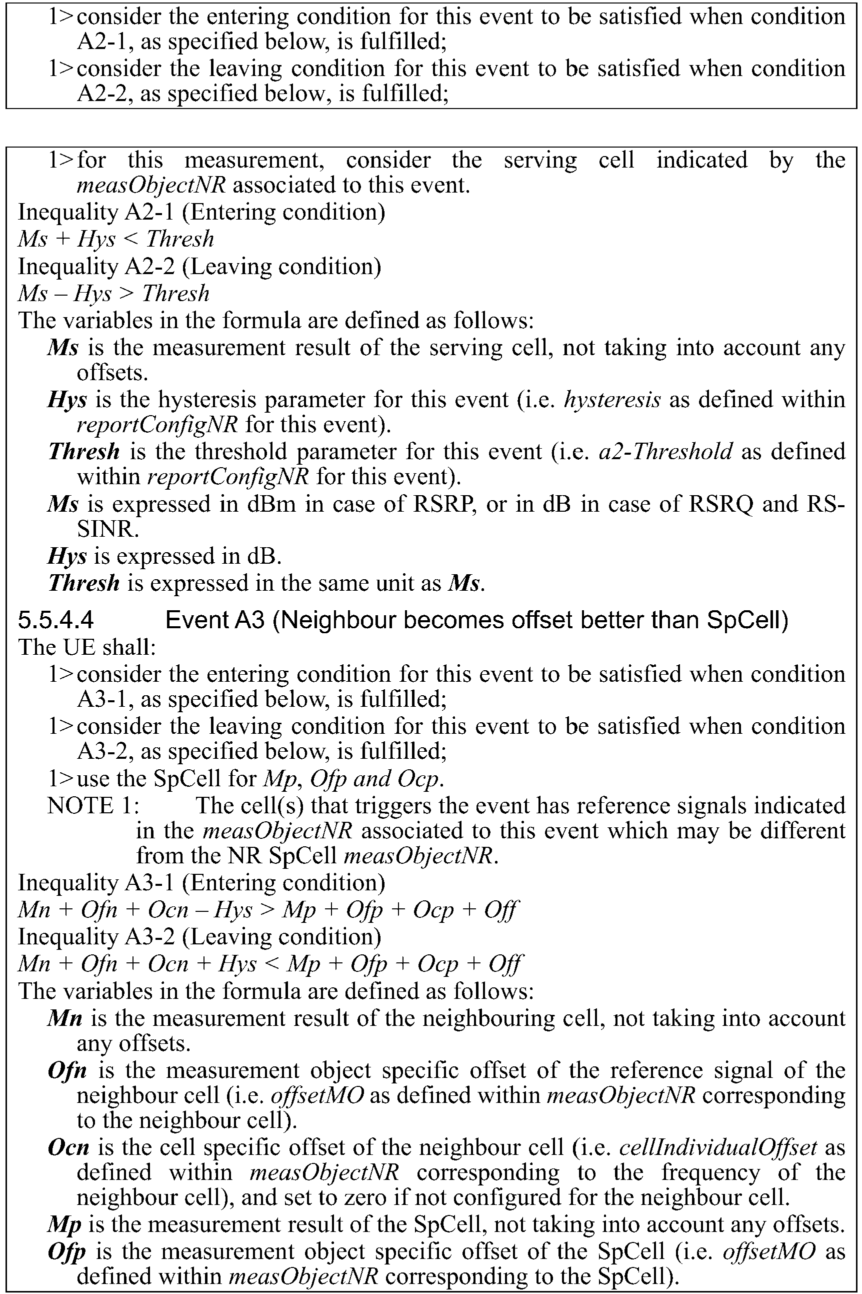

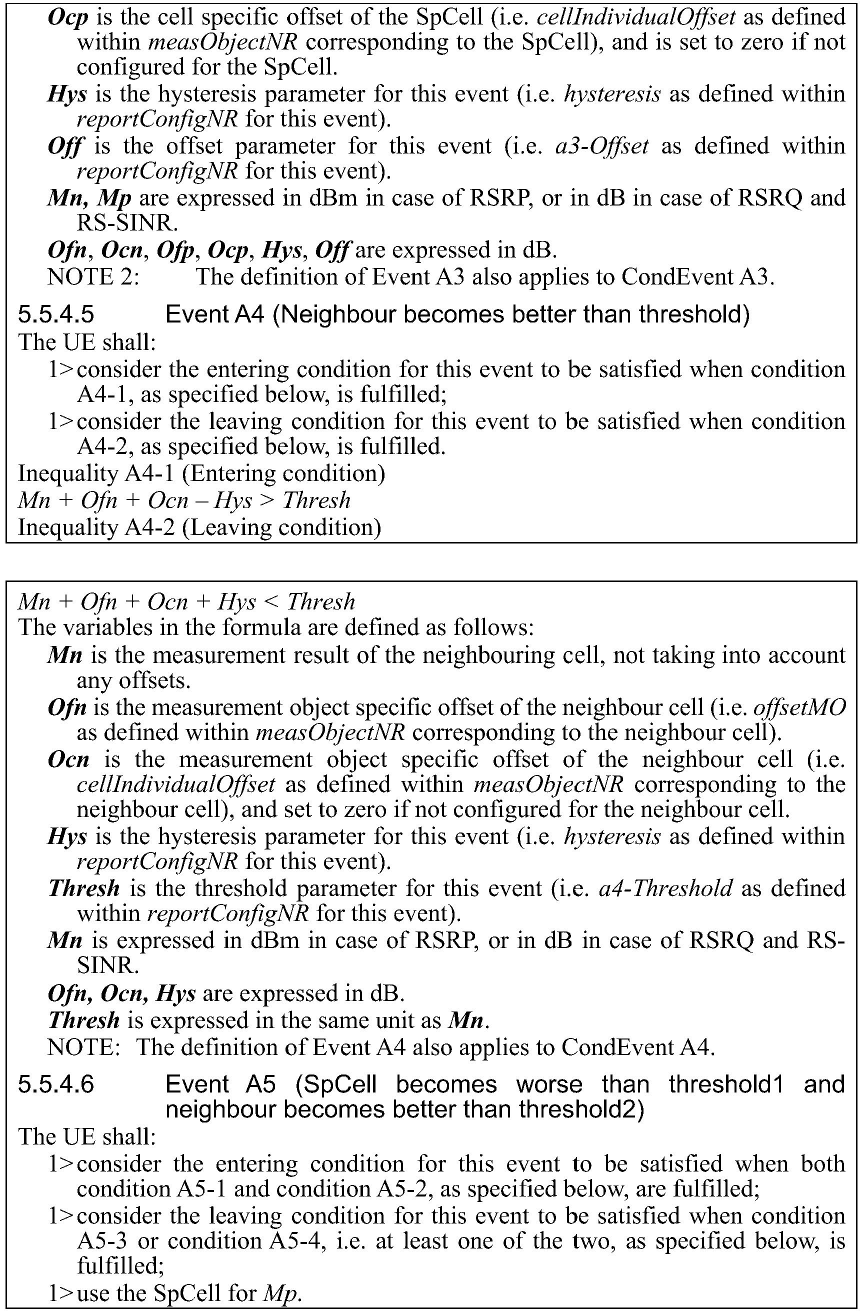

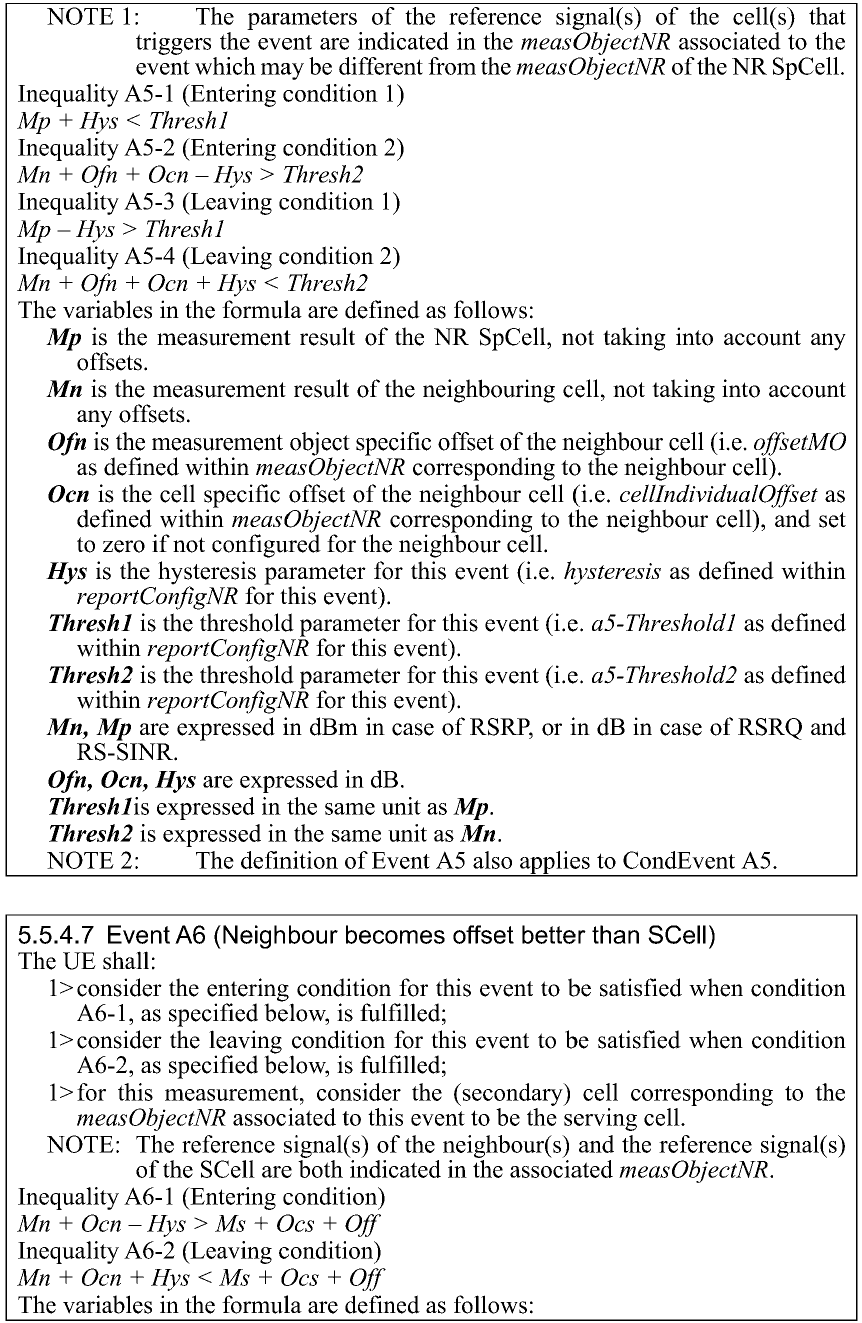

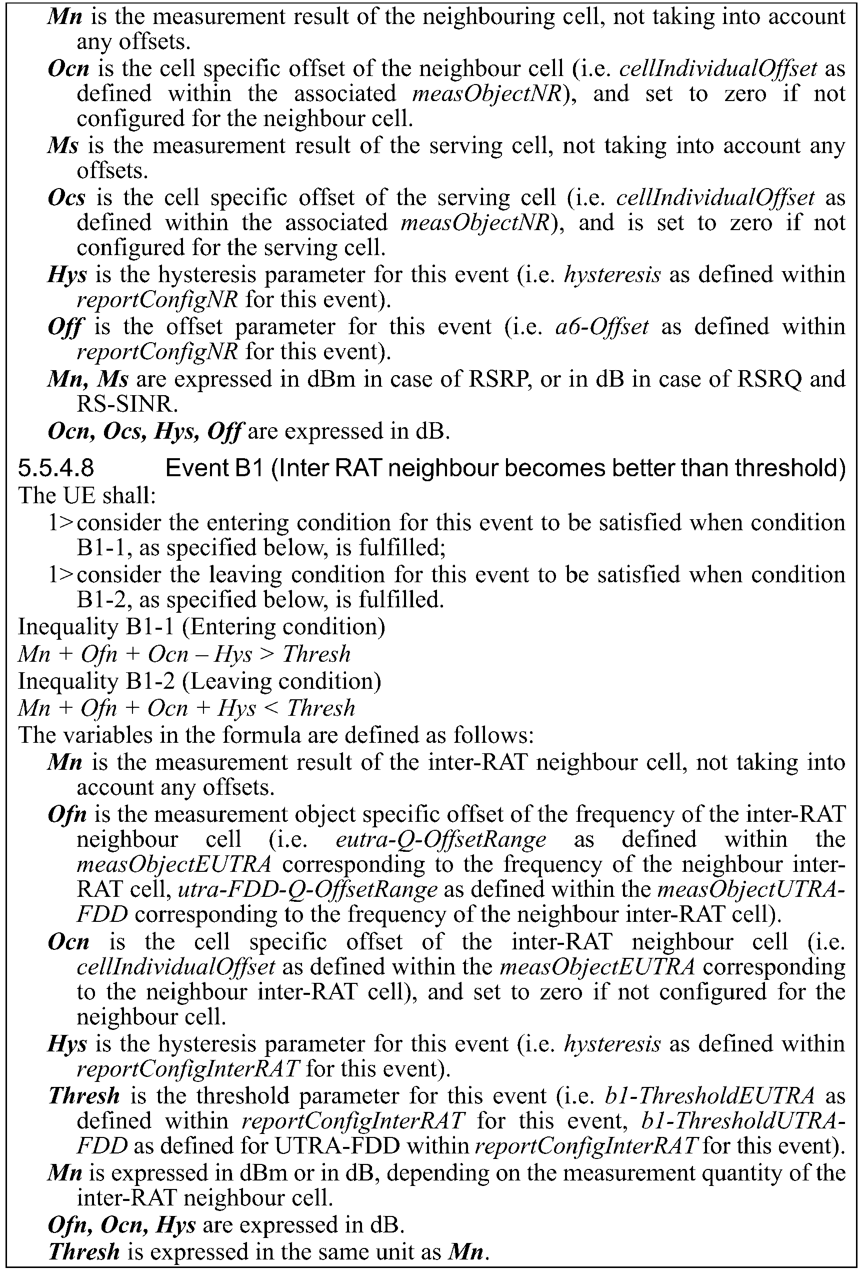

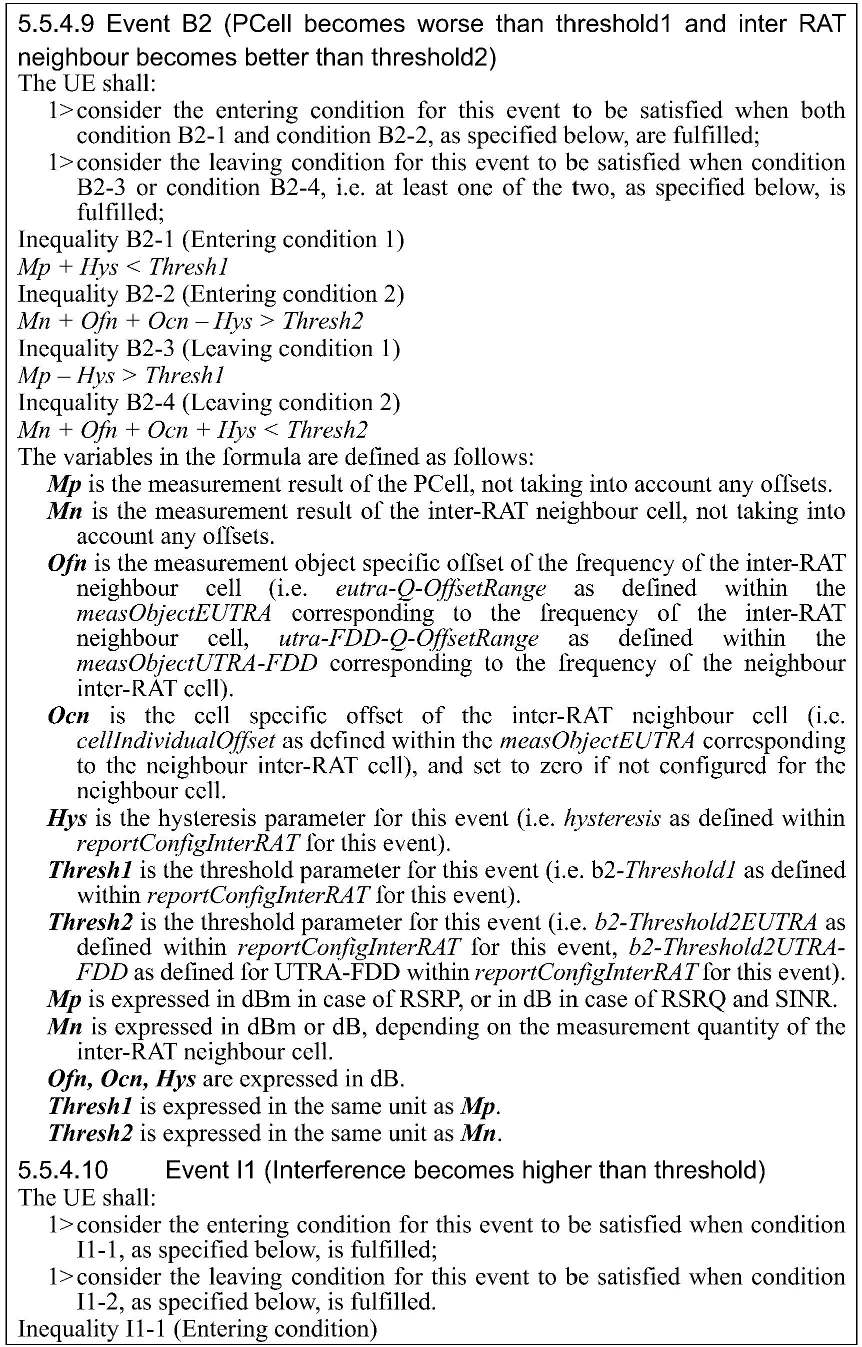

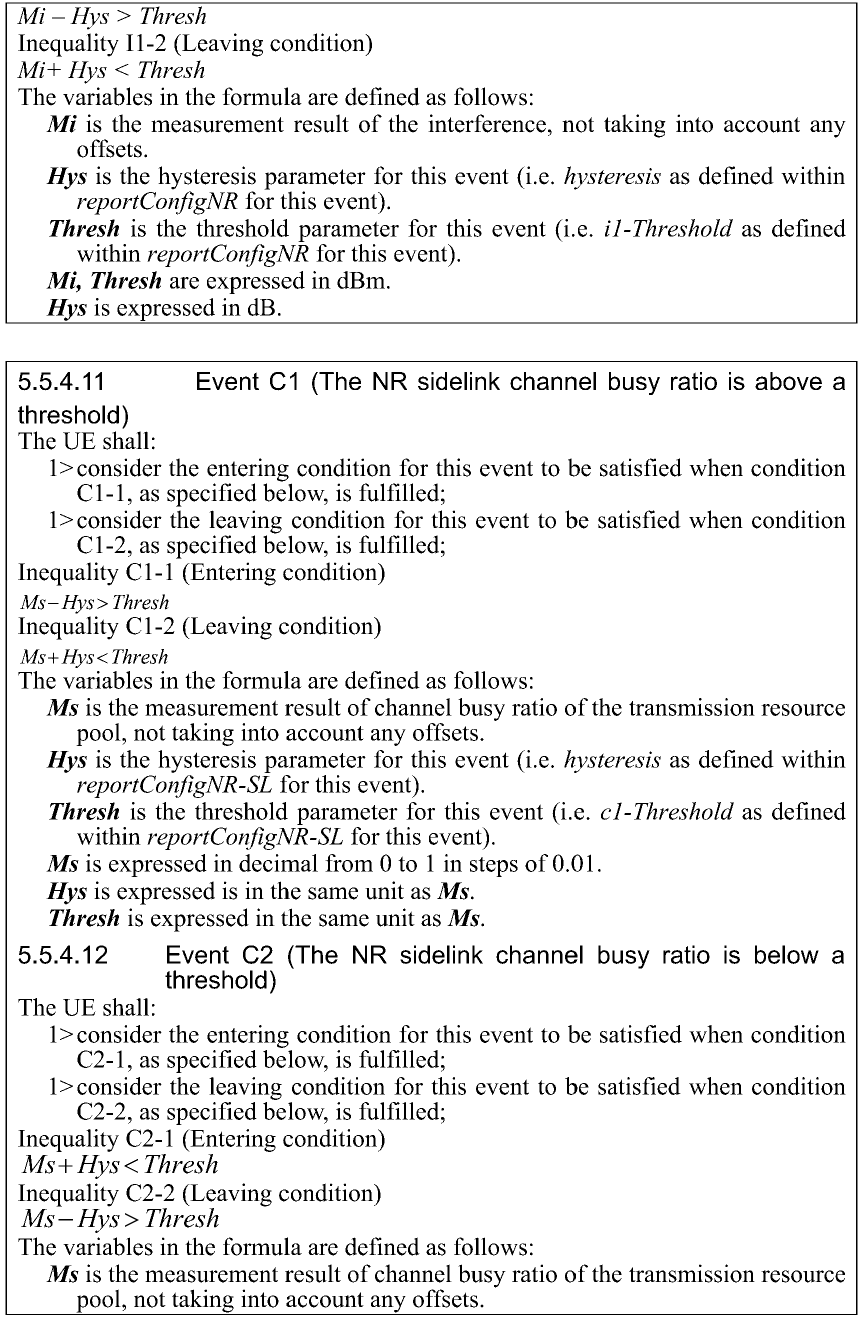

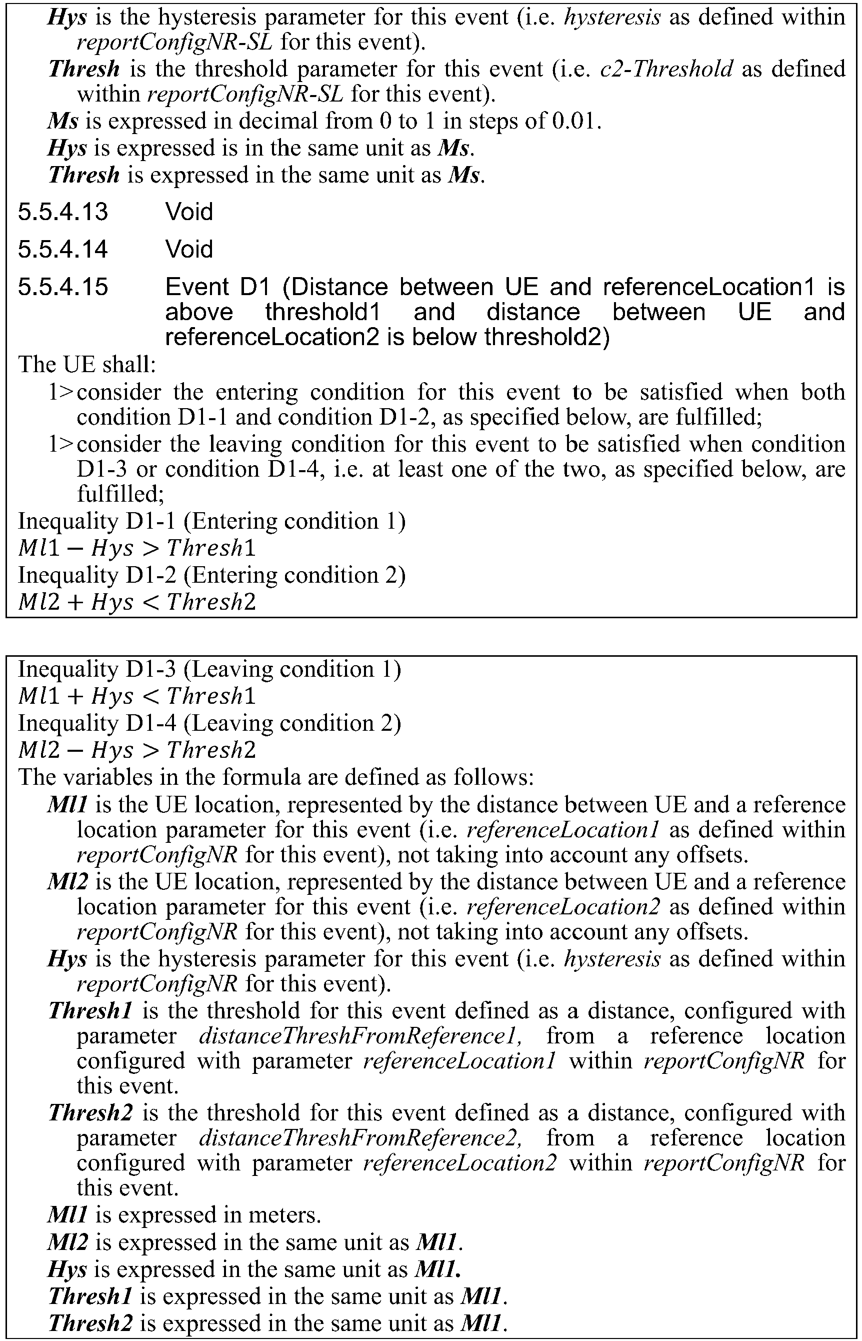

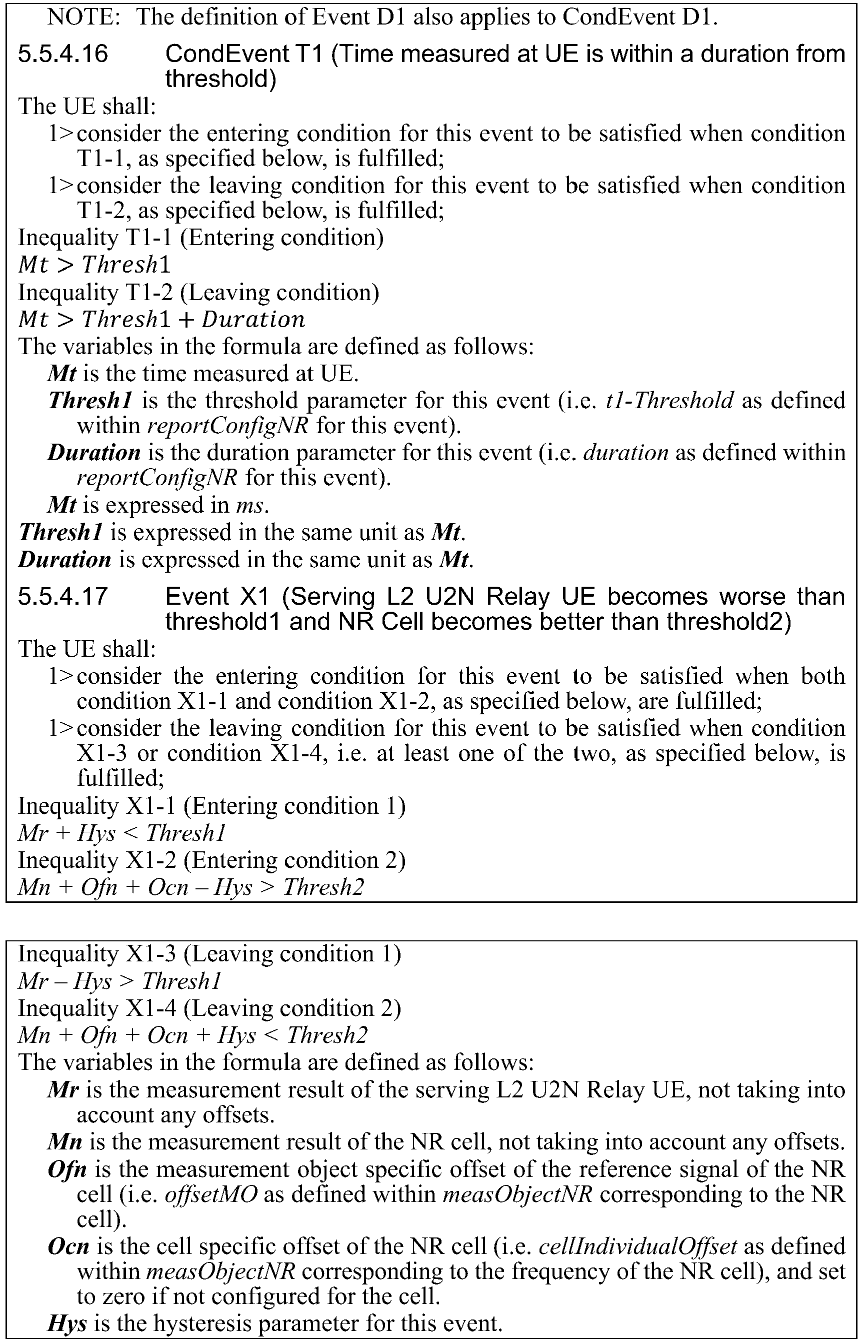

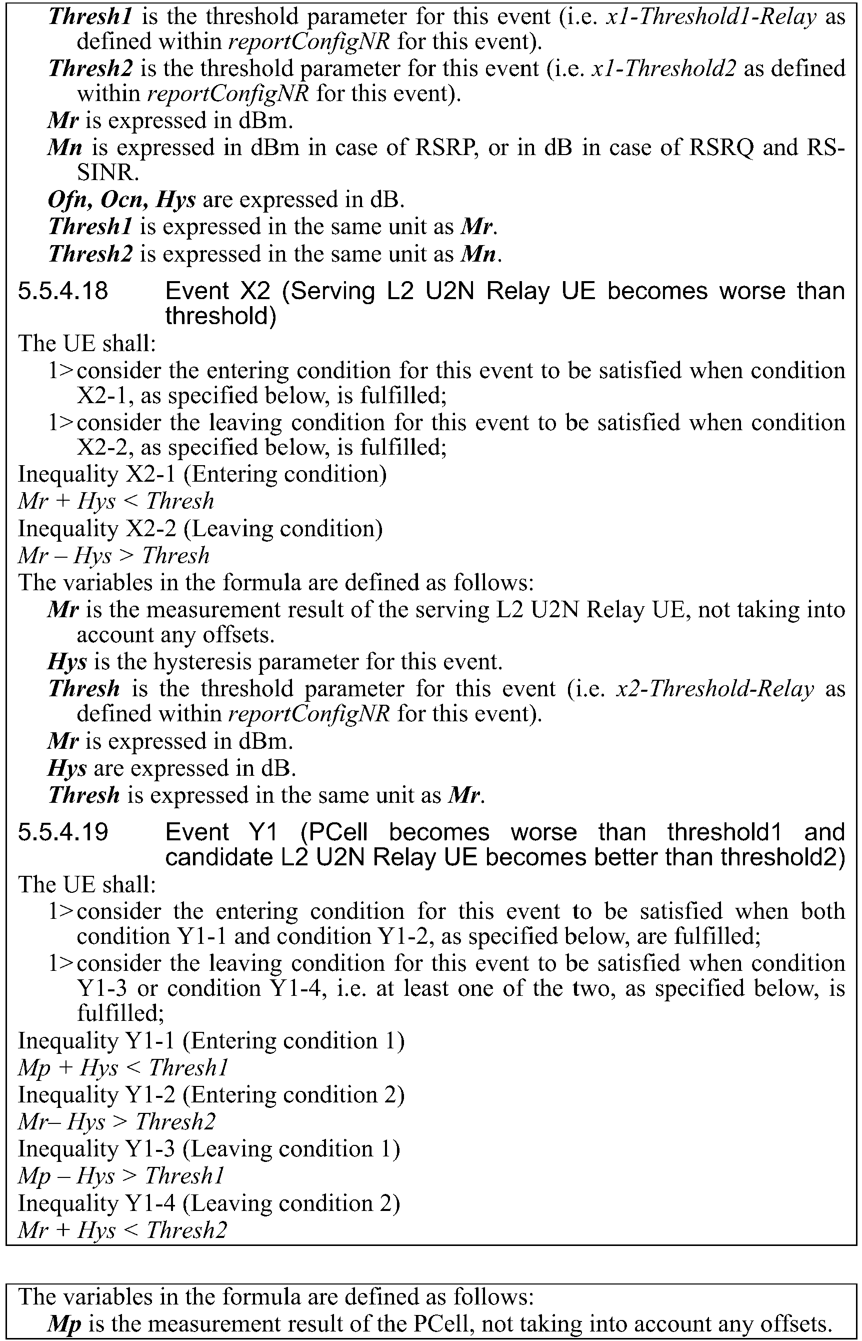

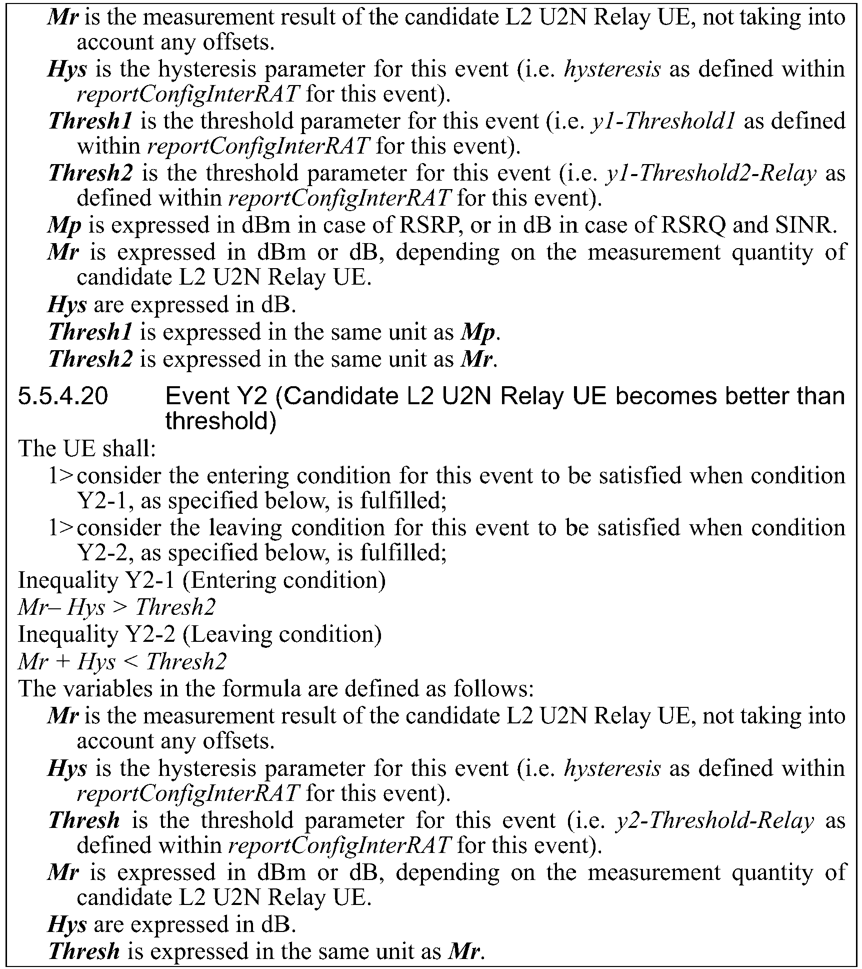

In operation 525, the UE 501 may transmit a measurement result message (MeasurementResult) to the base station 502 when a measurement reporting procedure is triggered on an event-based or periodic basis in operation 520. That is, the UE may include, in a measurement result message, a measurement result (measResults) for a measID for which a measurement reporting procedure is triggered, and transmit the message to the base station. The UE may include beam measurement information and a cell measurement result in the measurement result as shown in Table 6 below.

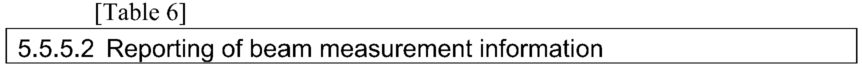

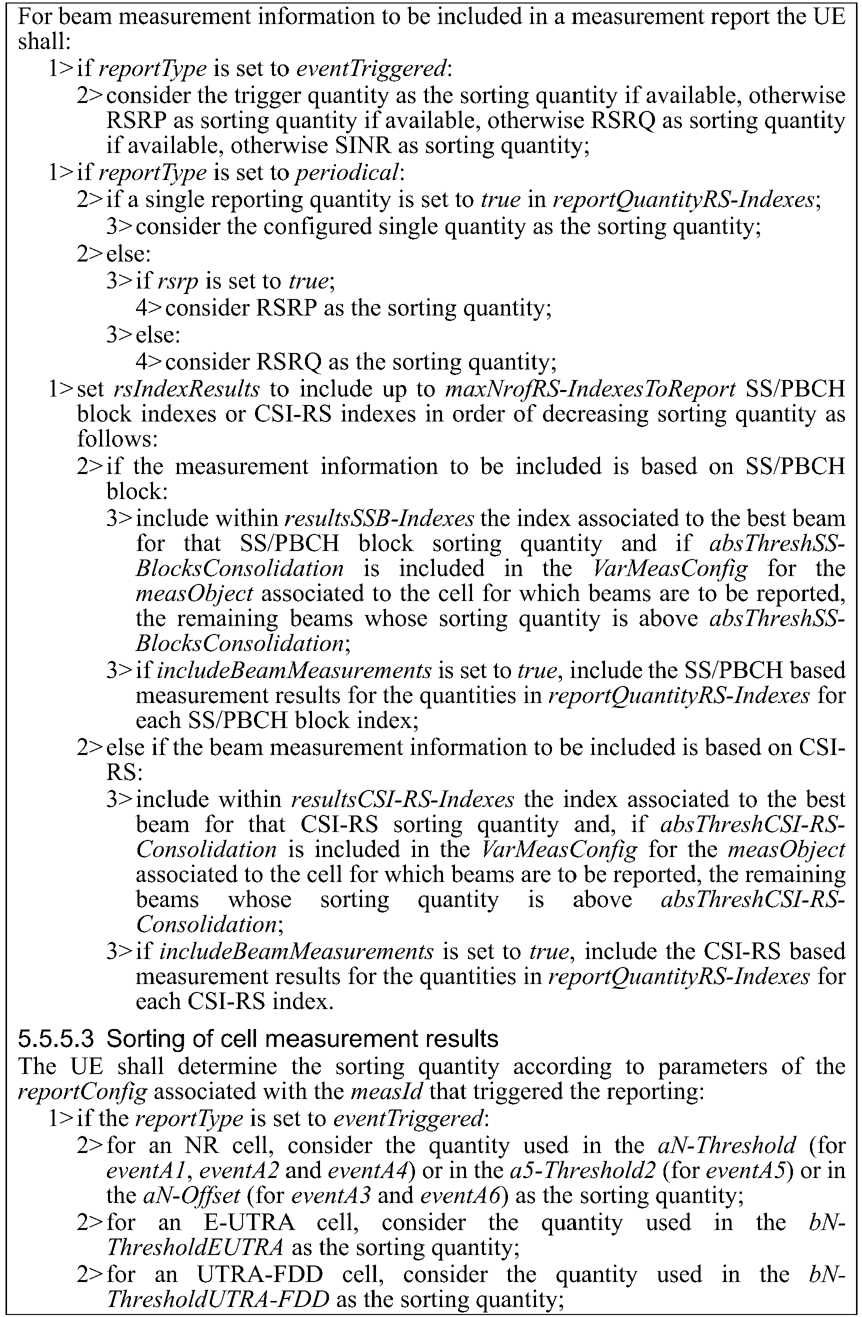

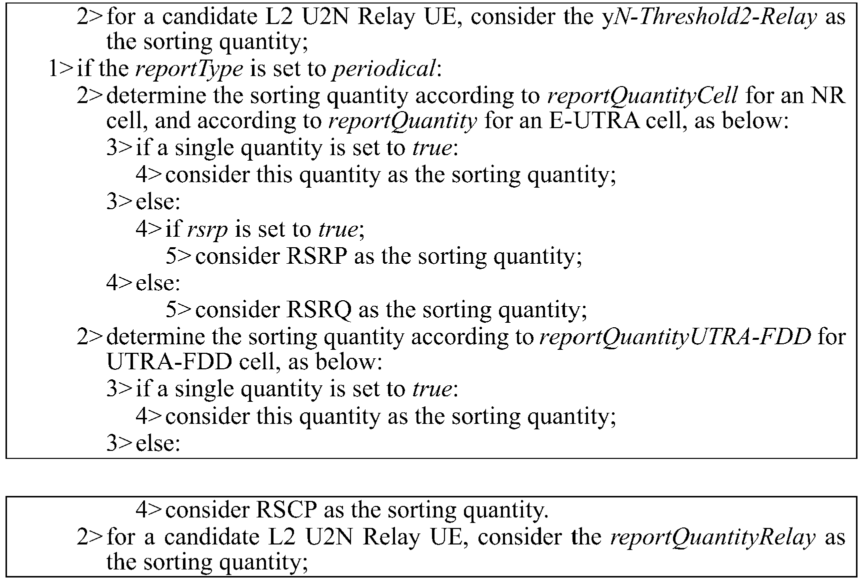

A specific procedure of including a measurement result in a measurement report message by the UE may be as shown in Table 7 below.

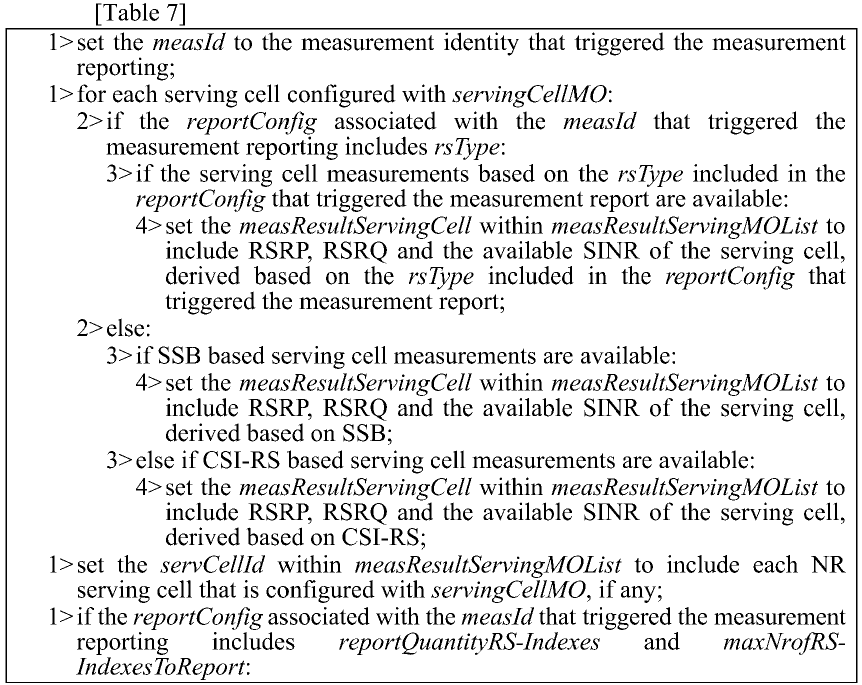

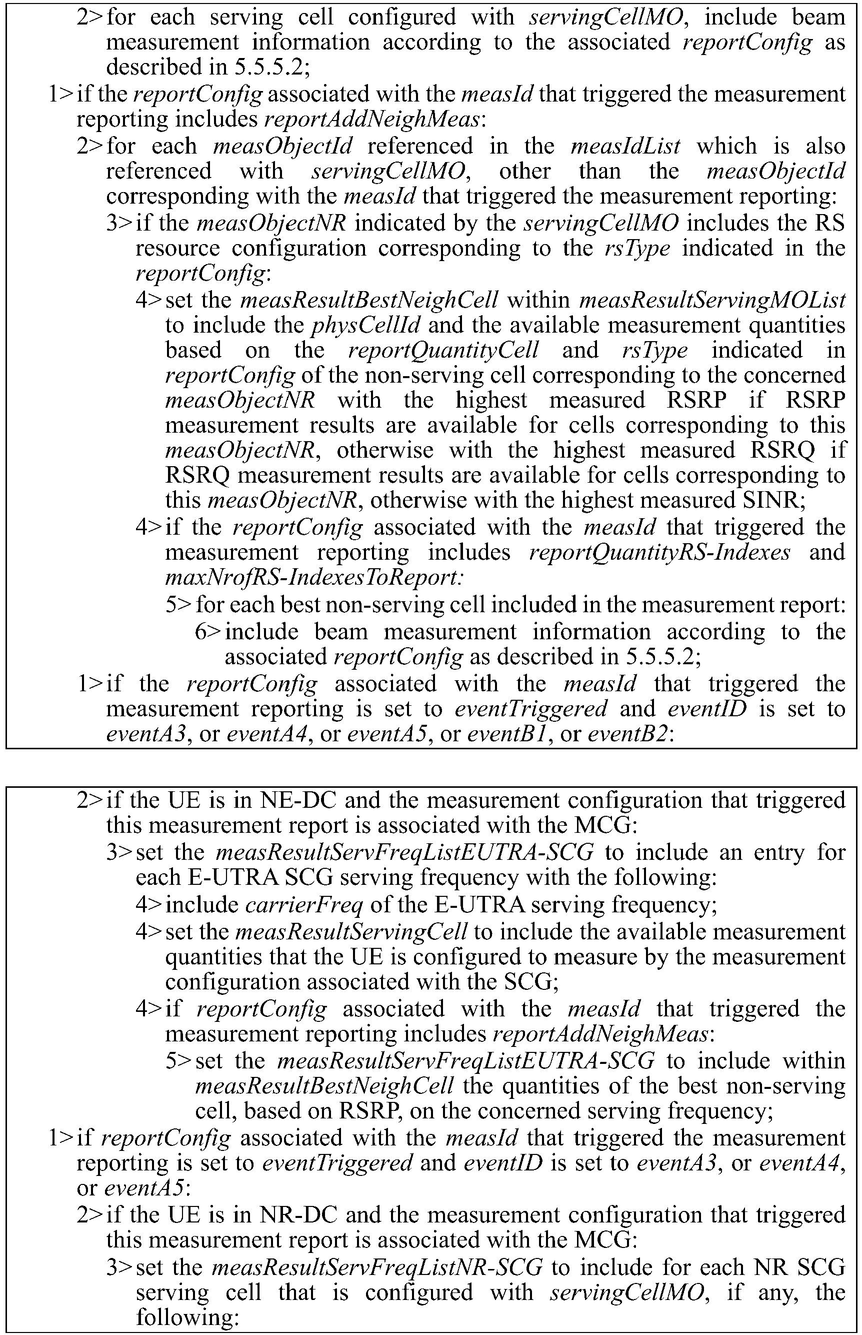

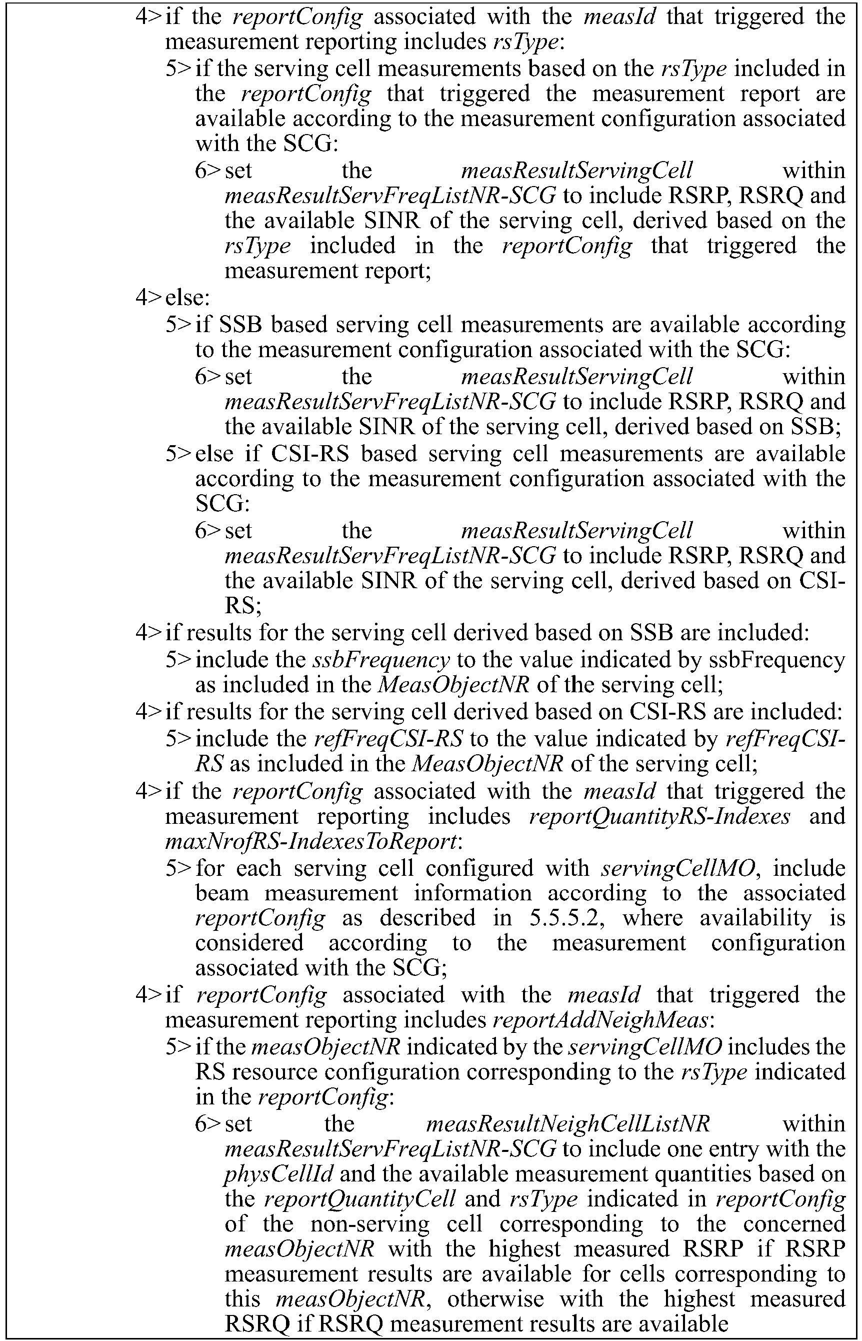

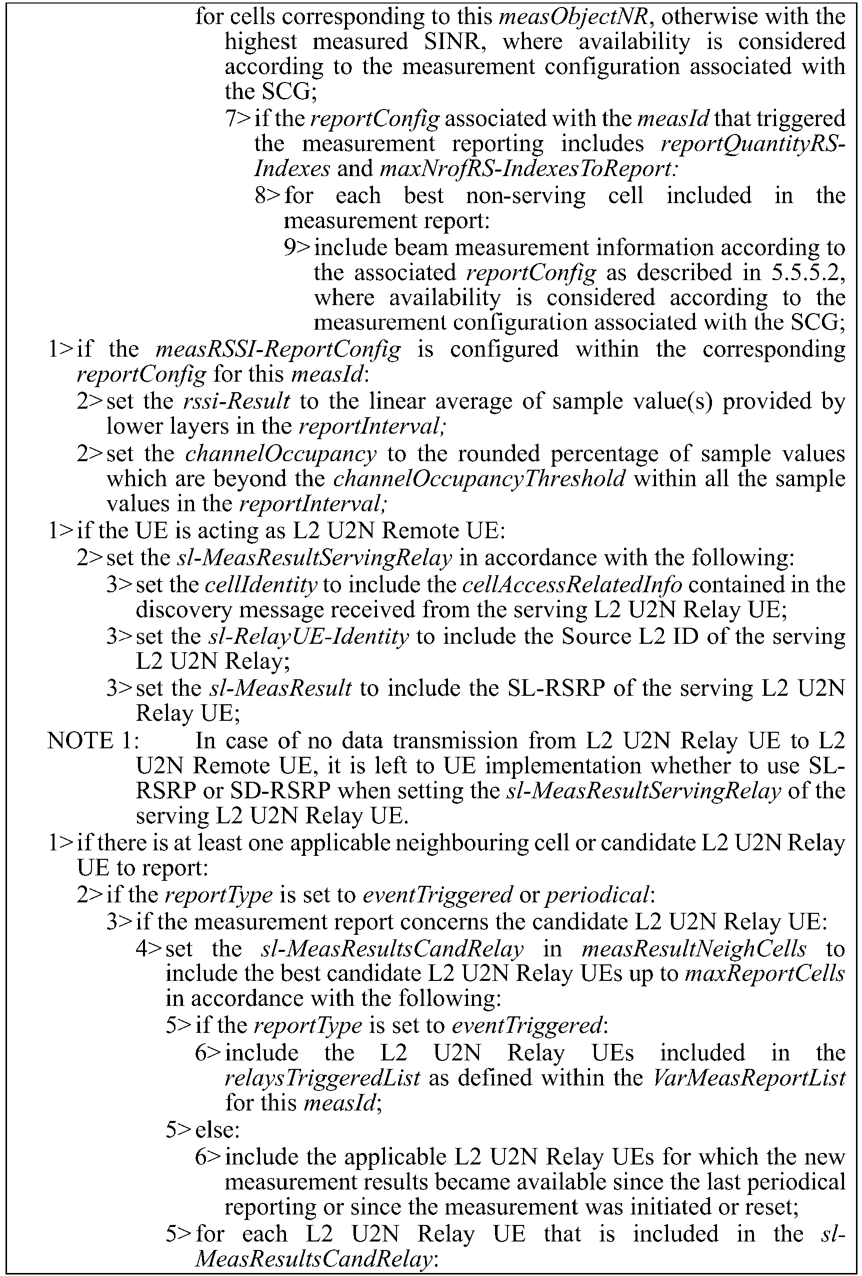

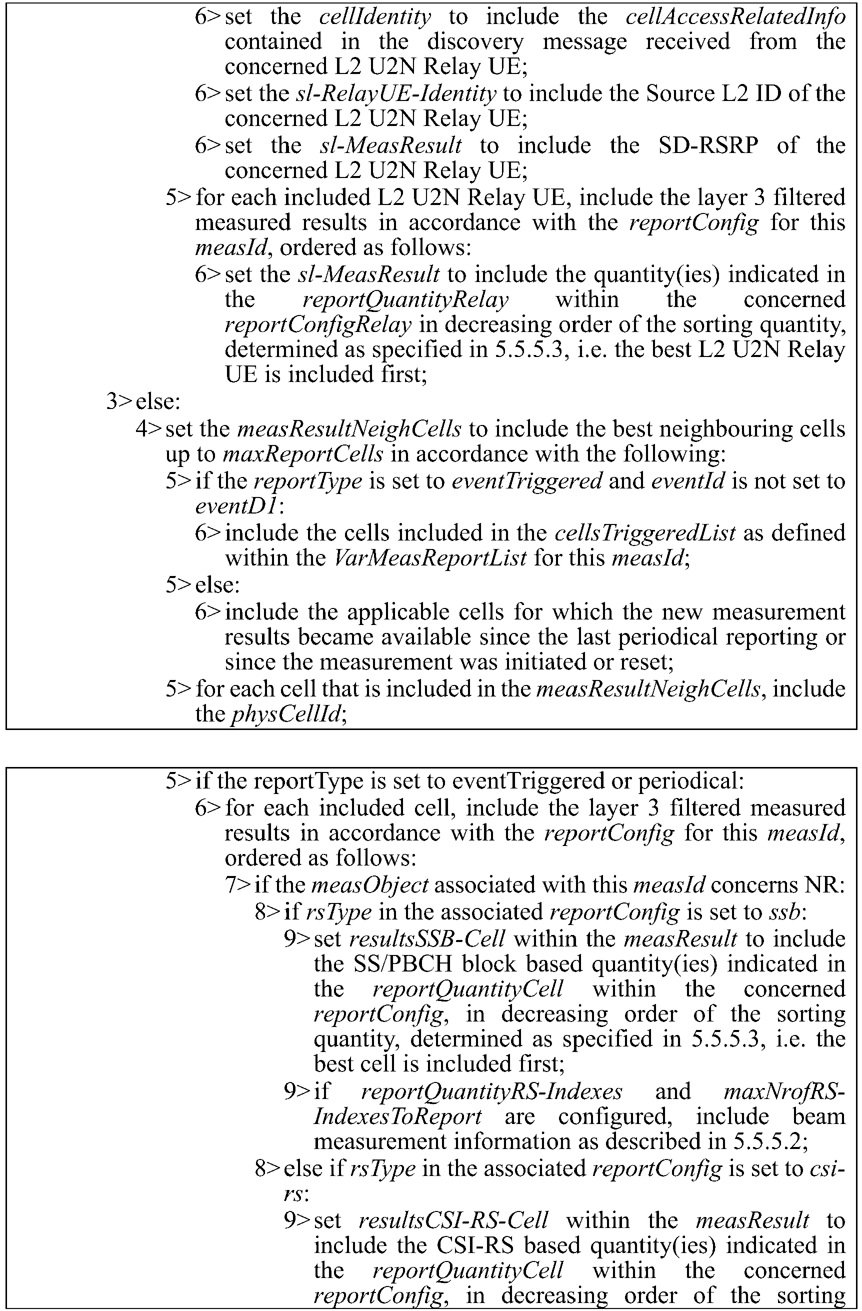

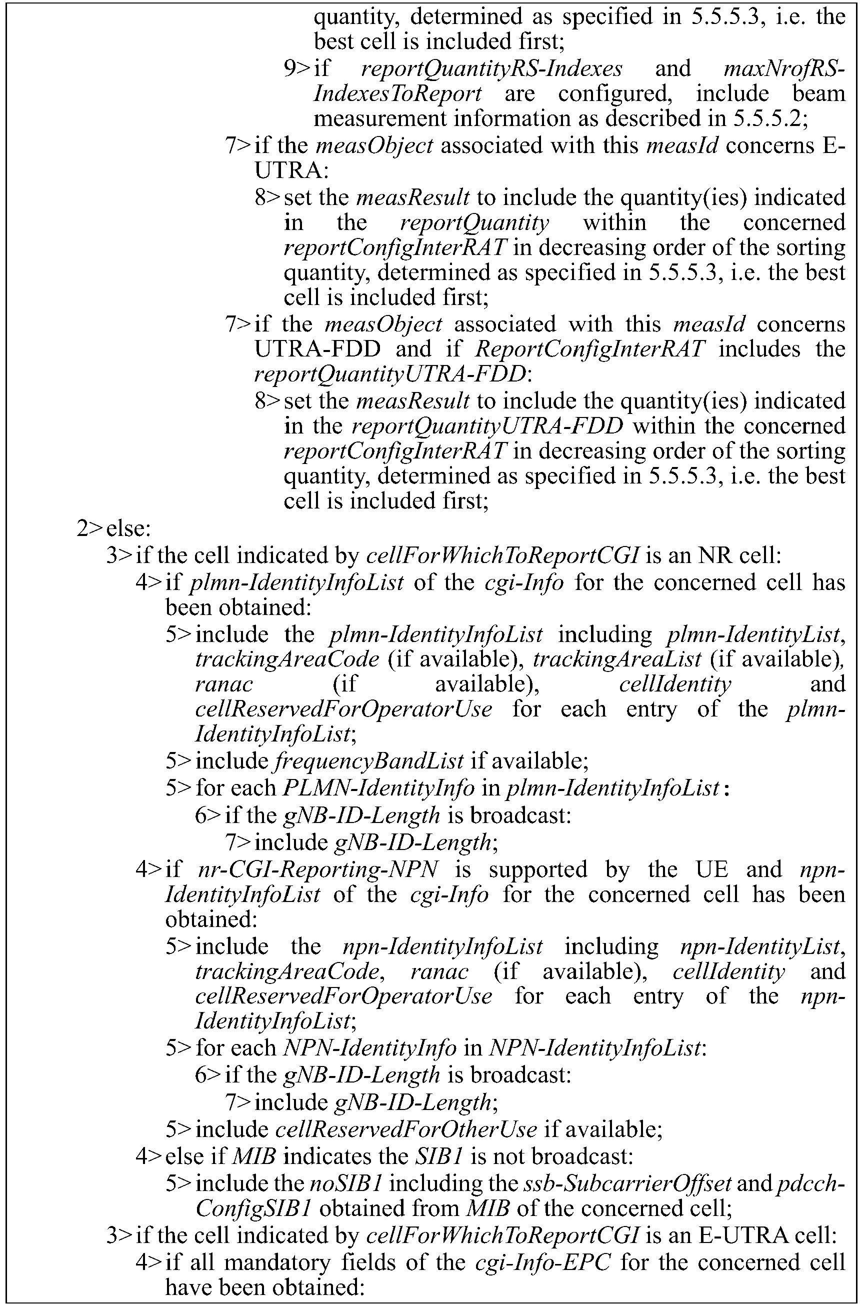

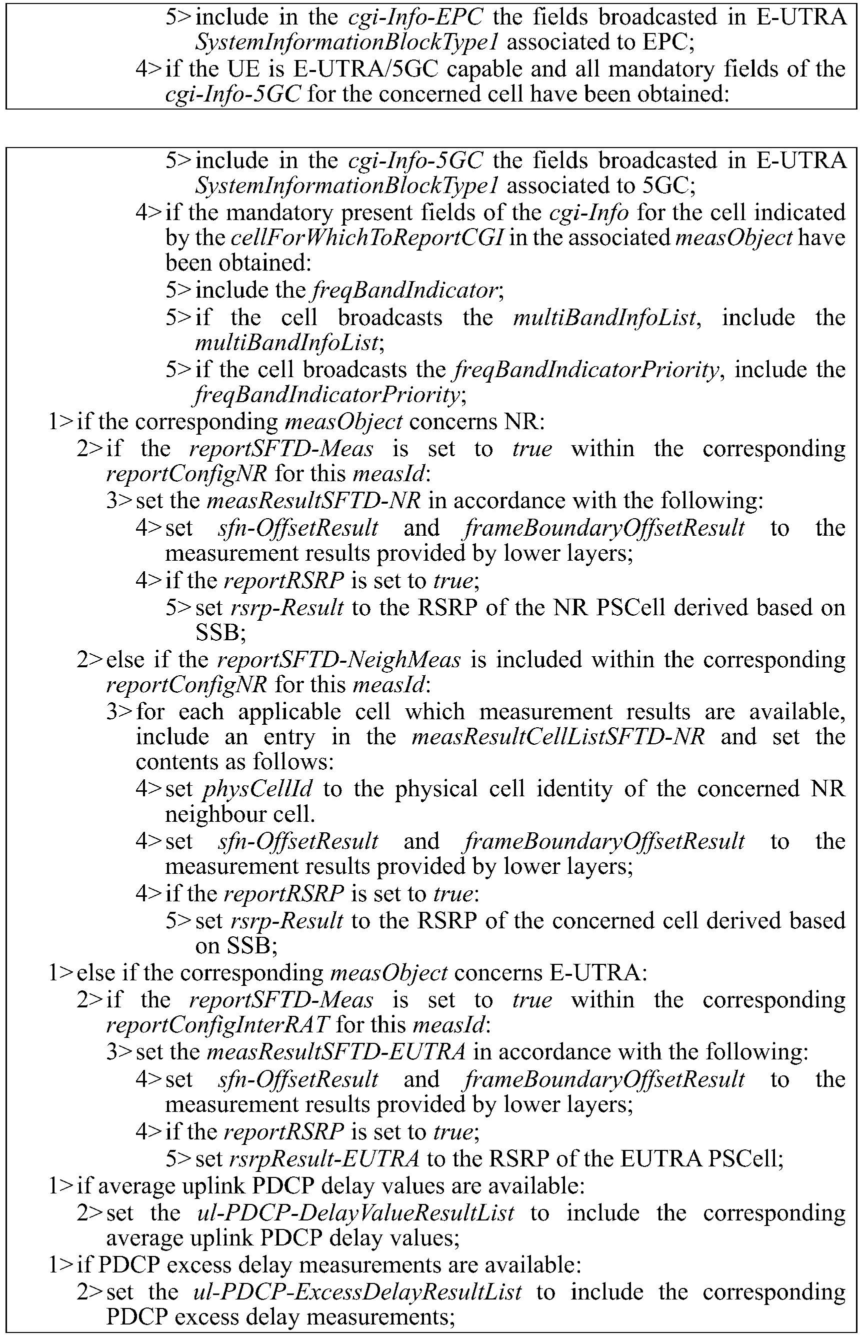

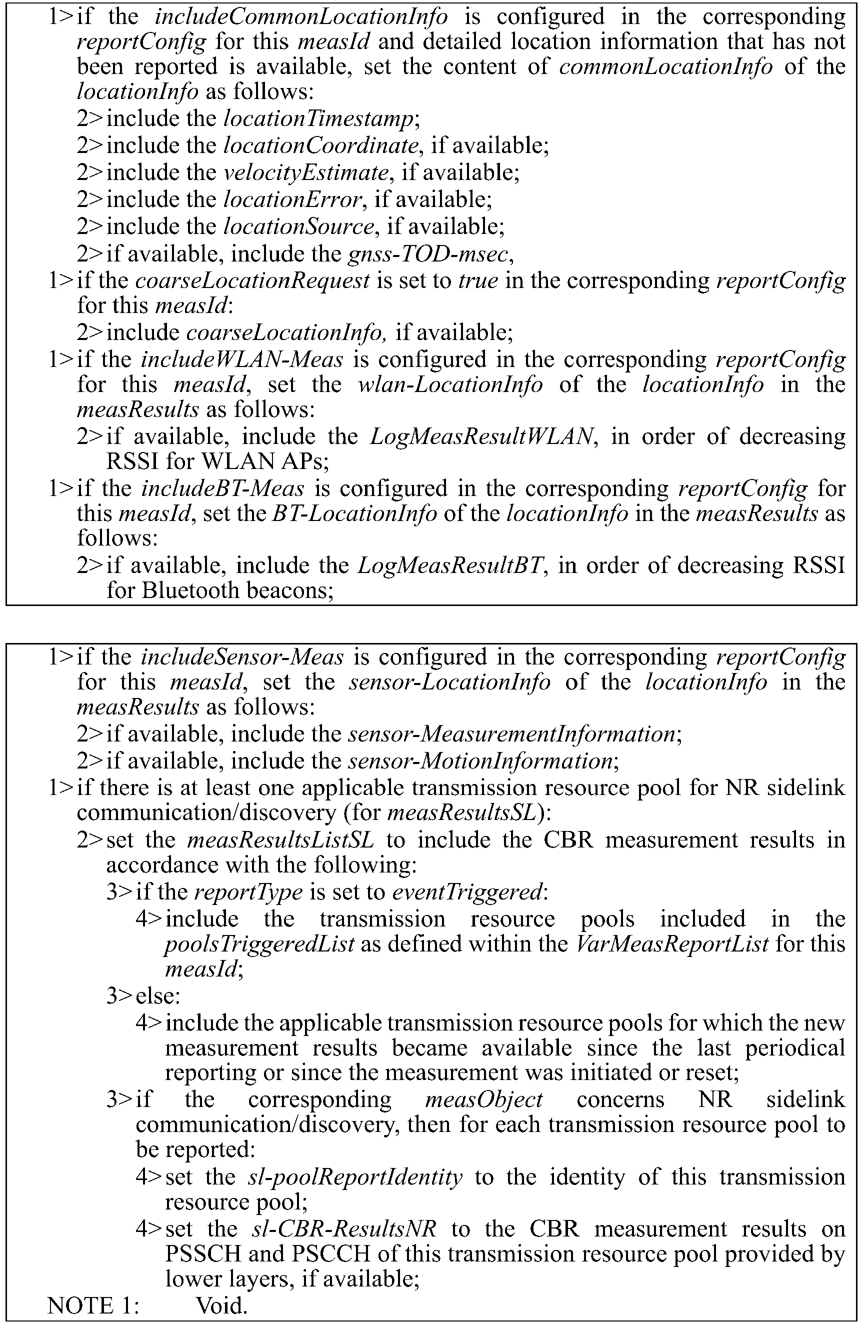

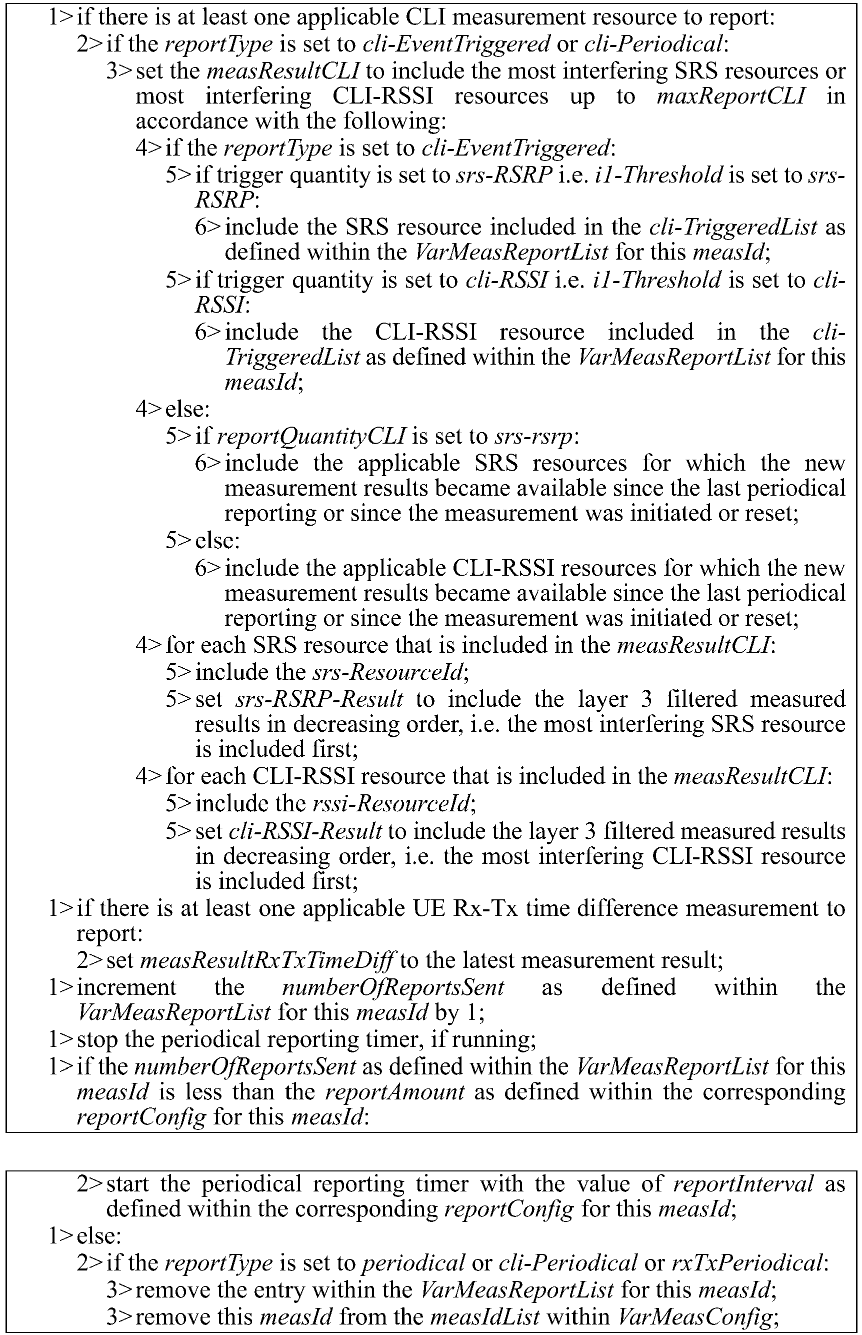

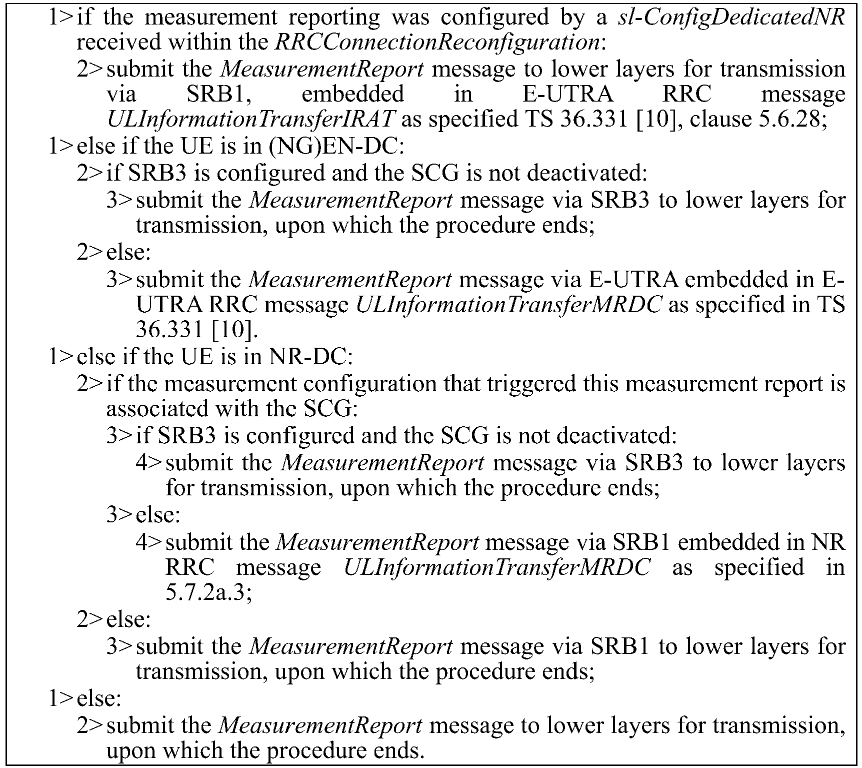

In operation 530, the base station 502 may transmit a predetermined RRC message (e.g., RRCReconfiguration) including cell group configuration information (CellGroupConfig) in order to add/modify/release a serving cell for the UE 501. The base station may add/modify/release a serving cell for the UE, based on the measurement report message received in operation 525. For reference, the measurement report message received from the UE includes a measurement result associated with one measID (measID is an identifier for mapping one measurement object to a reporting configuration including one reporting condition). Therefore, the base station receives, from the UE, a measurement result only for a measurement object for which a measurement reporting procedure is triggered and serving cells configured as servingCellMO among the current serving cells, and thus may fail to receive a measurement result for measurement objects not mapped to servingCellMO and measId. Therefore, when the base station needs to additionally configure, for the UE, a particular cell belonging to a particular frequency (e.g., carrier aggregation or dual connectivity), there may be a restriction in that the base station has to add the cell to the UE blindly in the state where a measurement result value of the cell is not received from the UE. Accordingly, when the UE and the base station support more frequencies, the restriction may make it difficult for the base station and the UE to configure carrier aggregation or dual connectivity quickly and efficiently.

According to the disclosure, the UE may measure NR intra or inter-frequency/inter-RAT frequency by applying measurement gaps or without measurement gaps according to the above condition. In this case, the UE may determine, by itself, which frequencies are to be measured first, and which reporting condition is to be triggered, based on a measured result, without the involvement of the base station. That is, the UE determines whether a particular reporting condition is satisfied, and transmits, to the base station, a measurement report message including a measurement result associated with one measID (measID is an identifier for mapping one measurement object to a reporting configuration including one reporting condition). Therefore, even when the base station configures many measurement objects for the UE, the base station may be unable to identify in advance whether the UE has actually measured the remaining measurement objects except for a measurement object for which a measurement reporting procedure is triggered, or whether the UE has stored/derived a valid measurement result value even though the UE has measured the remaining measurement objects. It is obvious that, as described above, the UE includes, in a measurement report message, a measurement result for frequencies (e.g., servingCellMO) to which the current serving cell belongs to according to a configuration of the base station. However, it is still difficult to identify in advance whether the UE has actually measured measurement objects not belonging to servingCellMO, or whether there is a valid measurement result value for the measurement objects. Therefore, when the base station is required to additionally configure a particular cell belonging to a particular frequency for the UE (e.g., carrier aggregation or dual connectivity), the base station may have to add the cell to the UE blindly in the state where a measurement result value of the cell is not received from the UE.

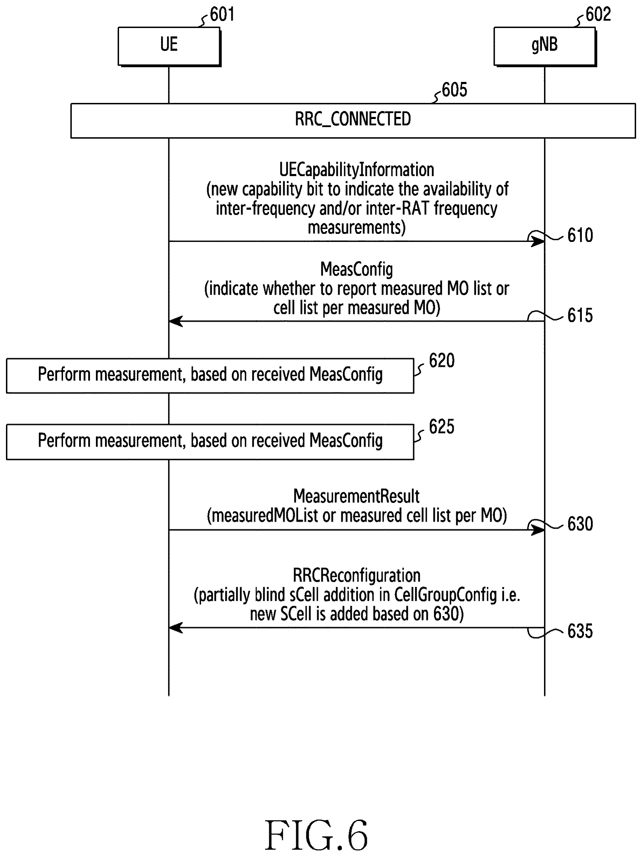

FIG. 6 is a flowchart illustrating a process in which a UE transmits a measurement result message to a base station according to an embodiment of the disclosure.

Referring to FIG. 6, a UE 601 may establish an RRC connection with an NR base station 602 and be in an RRC connected mode (RRC_CONNECTED) (operation 605).

In operation 610, the UE 601 may transmit a UE capability information message (UECapabilityInformation) according to a request of the base station 602. The message may include capability information indicating that information relating to whether or not the UE has measured one or multiple measurement objects (MeasurementObject) for NR inter-frequency or inter-RAT frequency may be included in a measurement report message. The measurement objects may indicate measurement objects which the UE does not include in measurement results included in a measurement report message according to the above embodiment.

Therefore, the UE according to an embodiment of the disclosure may additionally notify, through the measurement report message, the base station of whether measurement is performed for measurement objects configured by the base station as well as a measurement object for which a measurement reporting procedure is triggered. The capability information may be provided per UE or per frequency range (per FR). The UE may also include, in the measurement report message, a list of cells for which measurement has been performed for each measurement report.

In operation 615, the base station 602 may transmit a predetermined RRC message (e.g., RRCReconfiguration) including measurement configuration information (MeasConfig) to the UE 601. The measurement configuration information may follow the above embodiment. Additionally, the measurement configuration information may include an indicator or an information element providing an instruction to include, in a measurement report message, whether measurement is performed for measurement objects configured by the base station. Additionally, a measurement object-specific, a measurement identifier-specific, or a commonly applied particular measurement threshold value may be configured in the measurement configuration information. For example, the UE may additionally notify, through a measurement report message, the base station of whether measurement is performed for only measurement objects having a cell or beam measurement result greater than or greater than or equal to the configured measurement threshold value. The measurement threshold value may indicate a reference signal received power (RSRP) threshold value, a reference signal received quality (RSRQ) threshold value, and/or a signal to interference plus noise ratio (SINR) threshold value.

In operation 620, the UE 601 may perform measurement, based on the measurement configuration information received from the base station 602 in operation 615. This operation may follow the above embodiment.

In operation 625, the UE 601 may determine, based on a result of the measurement in operation 620, whether a condition for reporting a measurement result message (MeasurementReport) to the base station 602 is triggered. This operation may follow the above embodiment.

In operation 630, the UE 601 may transmit a measurement result message (MeasurementResult) to the base station 602 when a measurement reporting procedure is triggered on an event-based or periodic basis in operation 625. This operation may follow the above embodiment. Additionally, the UE according to the disclosure may include additional information in the measurement result message, based on at least one of the followings.
- A list of measurement objects which the UE has measured among the measurement objects configured by the base station, and/or a list of measurement objects which the UE has not measured
   * If possible, the UE may include a list of cells for which measurement has been performed for each measurement object together. A cell may refer to one of a physical identifier (physical cell ID), a frequency (e.g., ARFCN-NR) and a physical identifier, a cell identifier (cellIdentity), or a cell global identifier (configured by a combination of one of plmn-Identity, cellIdentity, and trackingAreaCode). Of course, a cell list may also be represented as a PCI range.
- A list of measurement identifiers which the UE has measured among the measurement identifiers configured by the base station, and/or a list of measurement identifiers which the UE has not measured. For reference, each measurement identifier is an identifier through which one measurement object and one reporting configuration are identifiable.
   * A cell list described above may also be included if possible.
- If a particular measurement threshold value is configured, a list of measurement objects or measurement identifiers having a cell or beam measurement result value greater than or greater than or equal to the value may be included. Of course, a list of measurement objects or measurement identifiers not included in the list of measurement objects or measurement identifiers may also be included.
   * If possible, a list of cells having a measurement result value greater than or equal to the particular threshold value may also be included.

For reference, the measurement objects may indicate measurement objects (e.g., measurement objects other than servingCellMO and a measurement object for which a measurement report is triggered) not included in the measurement result message in the embodiment of FIG. 5.

In operation 635, the base station 602 may transmit a predetermined RRC message (e.g., RRCReconfiguration) including cell group configuration information (CellGroupConfig) in order to add/modify/release a serving cell for the UE 601. The base station may add/modify/release a serving cell for the UE, based on the measurement report message received in operation 630. The base station may receive whether measurement is performed or whether a measurement result is present from the UE even for measurement objects not mapped to servingCellMO and measId in operation 630. Therefore, when the base station needs to additionally configure, for the UE, a particular cell belonging to a particular frequency (e.g., carrier aggregation or dual connectivity), even though there is no precise measurement result value for the cell, the base station may more efficiently add the cell to the UE blindly compared to the above embodiment. That is, the base station may determine a cell or frequency actually measured by the UE, as a candidate cell, and add same to the UE.

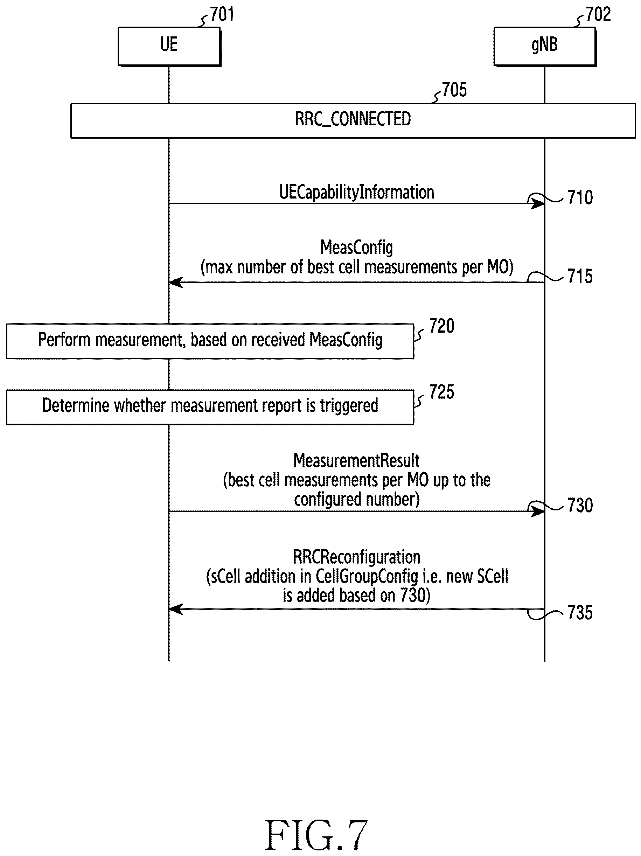

FIG. 7 is a flowchart illustrating a process in which a UE transmits a measurement result message to a base station according to an embodiment of the disclosure.

Referring to FIG. 7, a UE 701 may establish an RRC connection with an NR base station 702 and be in an RRC connected mode (RRC_CONNECTED) (operation 705).

In operation 710, the UE 701 may transmit a UE capability information message (UECapabilityInformation) according to a request of the base station 702. This operation may follow at least one of the above embodiments.

In operation 715, the base station 702 may transmit a predetermined RRC message (e.g., RRCReconfiguration) including measurement configuration information (MeasConfig) to the UE 701. The measurement configuration information may follow at least one of the above embodiments. Additionally, the maximum number of cells for which cell measurements are reportable for each measurement object configured by the base station may be configured in the measurement configuration information.

For example, when the base station configures 3 as the number, the UE may include, in a measurement report message, cell measurement values of a maximum of three cells for each measurement object. The cells included in the measurement report message may indicate three cells having the highest three cell measurement values when cell measurement values are sorted based on RSRP, RSRQ, or SINR according to a configuration of the base station or a configuration for which a measurement report is triggered. Alternatively, the maximum number of cells for which cell measurements are reportable among the measurement objects configured by the base station may be configured in the measurement configuration information. For example, when the base station configures 3 as the number, the UE may include, in a measurement report message, cell measurement result values of three cells having the best cell measurement values among the measurement objects. Of course, the number may be configured by the base station, but may also be a predetermined value. That is, the UE may perform the above operation according to a predetermined number of cells. Alternatively, the UE may also include, in the measurement report message, a list of cells having been measured for each measurement object for which measurement has been performed, and a measurement result for each cell. For reference, the measurement objects may indicate measurement objects (e.g., measurement objects other than servingCellMO and a measurement object for which a measurement report is triggered) not included in the measurement result message in the embodiment of FIG. 5.

In operation 720, the UE 701 may perform measurement, based on the measurement configuration information received from the base station 702 in operation 715. This operation may follow at least one of the above embodiments.

In operation 725, the UE 701 may determine, based on a result of the measurement in operation 720, whether a condition for reporting a measurement result message (MeasurementReport) to the base station 702 is triggered. This operation may follow at least one of the above embodiments.

In operation 730, the UE 701 may transmit a measurement result message (MeasurementResult) to the base station 702 when a measurement reporting procedure is triggered on an event-based or periodic basis in operation 725. This operation may follow at least one of the above embodiments. Additionally, the UE according to the disclosure may include additional information in the measurement result message, based on at least one of the followings.
- A list of measurement objects for which a cell measurement result value is includable in the measurement result message, in a list of measurement objects having been measured by the UE
   * A list of cells having been measured for each measurement object and a cell measurement result for each cell may be included (the UE may include same according to a configuration of the base station). In this case, a beam measurement result for each cell may also be included.
   * If a maximum number of cells for each measurement object is configured, the UE may include the cell identifiers and cell measurement results of as many cells having the best cell measurement values as the maximum number of cells for each measurement object. In this case, a beam measurement result for each cell may also be included.
   ** For reference, the maximum number of cells may be internally determined by the UE.
   * If a maximum number of cells among measurement objects is configured, the UE may include the cell identifiers and cell measurement results of as many cells having the best cell measurement values as the maximum number of cells for the measurement objects. In this case, a beam measurement result for each cell may also be included.
   ** For reference, the maximum number of cells may be internally determined by the UE.
- If a particular measurement threshold value is configured, a list of measurement objects having a cell or beam measurement result value greater than or greater than or equal to the value may be included.
   * A list of cells having been measured for each measurement object and a cell measurement result for each cell may be included. In this case, a beam measurement result for each cell may also be included.
   * A list of cells having cell measurement results greater than or greater than or equal to the threshold value for each measurement object, and a cell measurement result for each cell may be included. In this case, a beam measurement result for each cell may also be included.
   * If a maximum number of cells for each measurement object is configured, the UE may include the cell identifiers and cell measurement results of as many cells having the best cell measurement values as the maximum number of cells for each measurement object. The measurement results of the cells need to be greater than or greater than or equal to the particular measurement threshold value.
   * If a maximum number of cells among measurement objects is configured, the UE may include the cell identifiers and cell measurement results of as many cells having the best cell measurement values as the maximum number of cells among the measurement objects. The measurement results of the cells need to be greater than or greater than or equal to the particular measurement threshold value.

For reference, the measurement objects may indicate measurement objects (e.g., measurement objects other than servingCellMO and a measurement object for which a measurement report is triggered) not included in the measurement result message in the embodiment of FIG. 5.

In operation 735, the base station 702 may transmit a predetermined RRC message (e.g., RRCReconfiguration) including cell group configuration information (CellGroupConfig) in order to add/modify/release a serving cell for the UE 701. The base station may add/modify/release a serving cell for the UE, based on the measurement report message received in operation 730. The base station may receive whether measurement is performed or cell measurement result values from the UE even for measurement objects not mapped to servingCellMO and measId in operation 730. Therefore, when the base station needs to additionally configure, for the UE, a particular cell belonging to a particular frequency (e.g., carrier aggregation or dual connectivity), the base station may add the cell to the UE, based on the measurement result value of the cell.

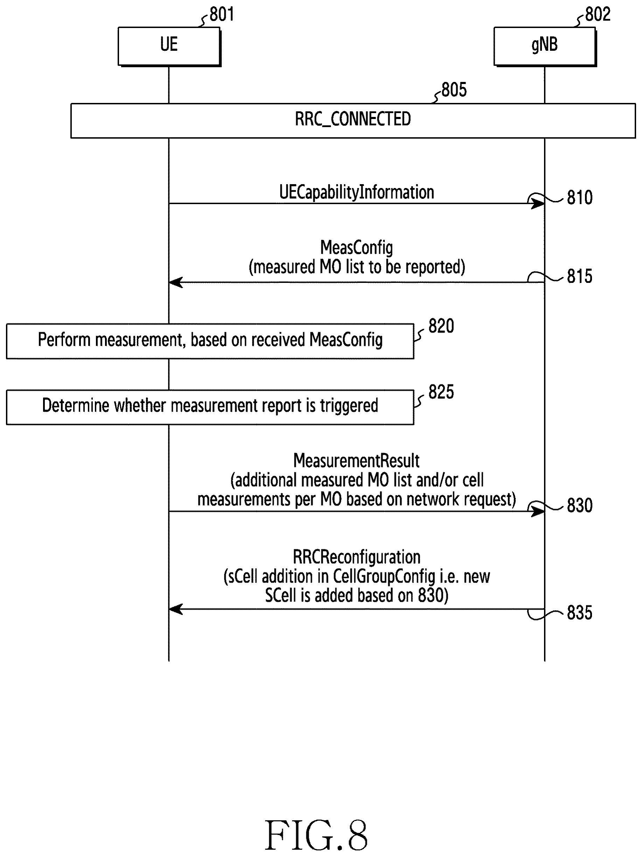

FIG. 8 is a flowchart illustrating a process in which a UE transmits a measurement result message to a base station according to an embodiment of the disclosure.

Referring to FIG. 8, a UE 801 may establish an RRC connection with an NR base station 802 and be in an RRC connected mode (RRC_CONNECTED) (operation 805).

In operation 810, the UE 801 may transmit a UE capability information message (UECapabilityInformation) according to a request of the base station 802. This operation may follow at least one of the above embodiments.

In operation 815, the base station 802 may transmit a predetermined RRC message (e.g., RRCReconfiguration) including measurement configuration information (MeasConfig) to the UE 801. The measurement configuration information may follow at least one of the above embodiments. Additionally, the measurement configuration information may include information providing an instruction to report measurement objects for which measurement is performed together when a measurement result message is transmitted. Each of the one or multiple measurement objects may be included in a reporting configuration, may be mapped to a measurement identifier, or may be included in a measurement object configuration. For example, the measurement objects being configured to be mapped to measurement identifiers may have the structure as shown in Table 8 below.

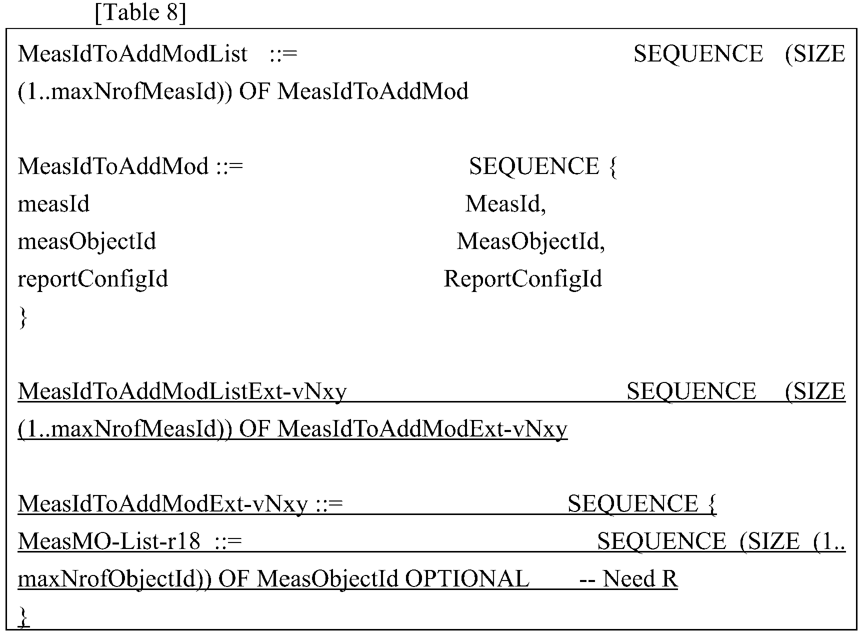

For reference, the measurement objects may indicate measurement objects neither associated with measId for which a measurement reporting procedure is triggered, nor mapped to servingCellMO.

In operation 820, the UE 801 may perform measurement, based on the measurement configuration information received from the base station 802 in operation 815. This operation may follow at least one of the above embodiments.

In operation 825, the UE 801 may determine, based on a result of the measurement in operation 820, whether a condition for reporting a measurement result message (MeasurementReport) to the base station 802 is triggered. This operation may follow at least one of the above embodiments.

In operation 830, the UE 801 may transmit a measurement result message (MeasurementResult) to the base station 802 when a measurement reporting procedure is triggered on an event-based or periodic basis in operation 825. This operation may follow at least one of the above embodiments. Additionally, the UE according to the disclosure may include at least one piece of information among the followings in the measurement result message.
- A measurement object list for which measurement has been performed among measurement object lists (according to a configuration of the base station) required to be additionally reported to the UE
   * A list of cells having been measured for each measurement object for which measurement has been performed and a cell measurement result for each cell may be included (the UE may include same according to a configuration of the base station). In this case, a beam measurement result for each cell may also be included.
   * If a maximum number of cells for each measurement object is configured, the UE may include the cell identifiers and cell measurement results of as many cells having the best cell measurement values as the maximum number of cells for each measurement object for which measurement has been performed. In this case, a beam measurement result for each cell may also be included.
   ** For reference, the maximum number of cells may be internally determined by the UE.
   * If a maximum number of cells among measurement objects is configured, the UE may include the cell identifiers and cell measurement results of as many cells having the best cell measurement values as the maximum number of cells for the measurement objects. In this case, a beam measurement result for each cell may also be included.
   ** For reference, the maximum number of cells may be internally determined by the UE.
- If a particular measurement threshold value is configured, a measurement object list having a cell or beam measurement result value greater than or greater than or equal to the threshold value among measurement object lists (according to a configuration of the base station) required to be additionally reported to the UE
   * A list of cells having been measured for each measurement object and a cell measurement result for each cell may be included (the UE may include same according to a configuration of the base station). In this case, a beam measurement result for each cell may also be included.
   * A list of cells having cell measurement results greater than or greater than or equal to the threshold value for each measurement object, and a cell measurement result for each cell may be included. In this case, a beam measurement result for each cell may also be included.
   * If a maximum number of cells for each measurement object is configured, the UE includes the cell identifiers and cell measurement results of as many cells having the best cell measurement values as the maximum number of cells for each measurement object required to be additionally reported
   ** A cell identifier may correspond to one of the above embodiments.
   * If a maximum number of cells among measurement objects is configured, the UE includes the cell identifiers and cell measurement results of as many cells having the best cell measurement values as the maximum number of cells among the measurement objects required to be additionally reported In this case, a measurement object may indicate only a measurement object including cell measurement.
   * For reference, the maximum number of cells may be internally determined by the UE.

For reference, the measurement objects may indicate measurement objects (e.g., measurement objects other than servingCellMO and a measurement object for which a measurement report is triggered) not included in the measurement result message in the embodiment of FIG. 5.

In operation 835, the base station 802 may transmit a predetermined RRC message (e.g., RRCReconfiguration) including cell group configuration information (CellGroupConfig) in order to add/modify/release a serving cell for the UE 801. The base station may add/modify/release a serving cell for the UE, based on the measurement report message received in operation 830. The base station may receive whether measurement is performed or cell measurement result values from the UE even for measurement objects not mapped to servingCellMO and measId in operation 830. Therefore, when the base station needs to additionally configure, for the UE, a particular cell belonging to a particular frequency (e.g., carrier aggregation or dual connectivity), the base station may add the cell to the UE, based on the measurement result value of the cell.

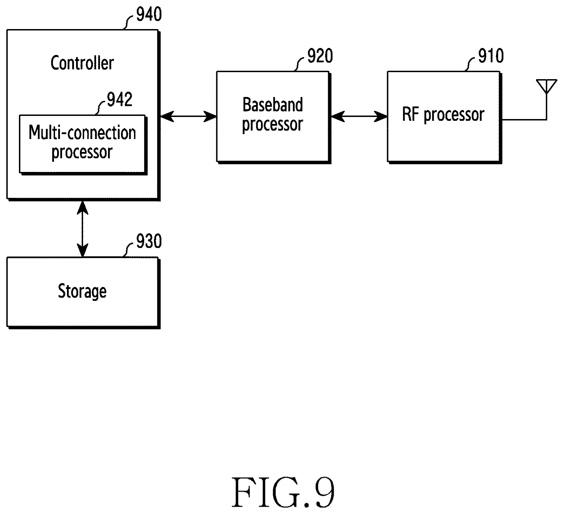

FIG. 9 is a block diagram illustrating an internal structure of a UE according to an embodiment of the disclosure.

Referring to the drawing, the UE may include a radio frequency (RF) processor 910, a baseband processor 920, a storage 930, and a controller 940.

The RF processor 910 may perform functions for transmitting/receiving signals through a radio channel, such as signal band conversion and amplification. That is, the RF processor 910 may up-convert a baseband signal provided from the baseband processor 920 to an RF band signal, may transmit the same through an antenna, and may down-convert an RF band signal received through the antenna to a baseband signal. For example, the RF processor 910 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 910 may include multiple RF chains. Furthermore, the RF processor 910 may perform beamforming. For the beamforming, the RF processor 910 may adjust the phase and magnitude of signals transmitted/received through multiple antennas or antenna elements, respectively. In addition, the RF processor may perform MIMO, and may receive multiple layers when performing a MIMO operation.

The baseband processor 920 may perform functions of conversion between baseband signals and bitstrings according to the system's physical layer specifications. For example, during data transmission, the baseband processor 920 may encode and modulate a transmitted bitstring to generate complex symbols. In addition, during data reception, the baseband processor 920 may demodulate and decode a baseband signal provided from the RF processor 910 to restore a received bitstring. For example, when following the orthogonal frequency division multiplexing (OFDM) scheme, during data transmission, the baseband processor 920 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 920 may split a baseband signal provided from the RF processor 910 at the OFDM symbol level, may restore signals mapped to subcarriers through a fast Fourier transform (FFT) operation, and may restore a received bitstring through demodulation and decoding.

The baseband processor 920 and the RF processor 910 transmit and receive signals as described above. Therefore, the baseband processor 920 and the RF processor 910 may be referred to as a transmitter, a receiver, a transceiver, or a communication unit. Furthermore, at least one of the baseband processor 920 and the RF processor 910 may include multiple communication modules to support multiple different radio access technologies. In addition, at least one of the baseband processor 920 and the RF processor 910 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 930 stores basic programs, application programs, and data, such as configuration information, for operation of the main base station. Particularly, the storage 930 may store information regarding a second access node configured to perform wireless communication by using a second radio access technology. In addition, the storage 930 provides the stored data at the request of the controller 940.

The controller 940 controls the overall operation of the UE. For example, the controller 940 transmits/receives signals through the baseband processor 920 and the RF processor 910. In addition, the controller 940 records data in the storage 930 and reads the data from the storage 930. To this end, the controller 940 may include at least one processor. For example, the controller 940 may include a communication processor (CP) configured to perform control for communication, and an application processor (AP) configured to control upper layers such as application programs. The controller 940 may further include a multi-connection processor 942 to support multiple connections.

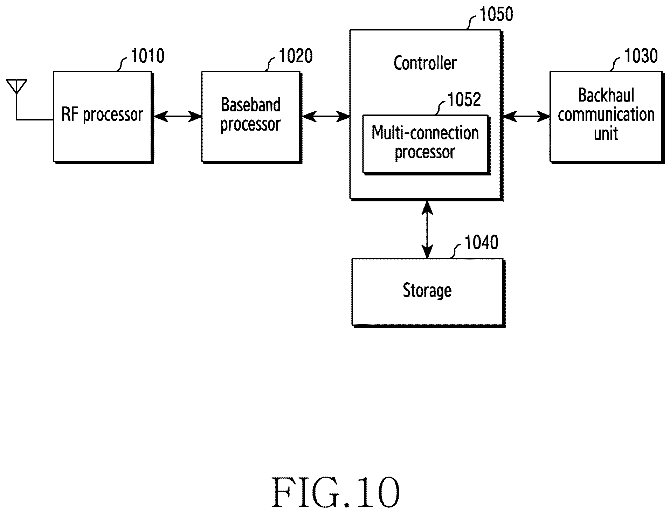

FIG. 10 is a block diagram illustrating a structure of an NR base station according to an embodiment of the disclosure.

As illustrated in the drawing, the base station may include an RF processor 1010, a baseband processor 1020, a backhaul communication unit 1030, a storage 1040, and a controller 1050.

The RF processor 1010 may perform functions for transmitting/receiving signals through a radio channel, such as signal band conversion and amplification. That is, the RF processor 1010 may up-convert a baseband signal provided from the baseband processor 1020 to an RF band signal, may transmit the same through an antenna, and may down-convert an RF band signal received through the antenna to a baseband signal. For example, the RF processor 1010 may include a transmission filter, a reception filter, an amplifier, a mixer, an oscillator, a DAC, and an ADC. Although only one antenna is illustrated in the drawing, the first access node may include multiple antennas. In addition, the RF processor 1010 may include multiple RF chains. Furthermore, the RF processor 1010 may perform beamforming. For the beamforming, the RF processor 1010 may adjust the phase and magnitude of signals transmitted/received through multiple antennas or antenna elements, respectively. The RF processor may transmit one or more layers to perform a downward MIMO operation.

The baseband processor 1020 may perform functions of conversion between baseband signals and bitstrings according to the physical layer specifications of a first radio access technology. For example, during data transmission, the baseband processor 1020 may encode and modulate a transmitted bitstring to generate complex symbols. In addition, during data reception, the baseband processor 1020 may demodulate and decode a baseband signal provided from the RF processor 1010 to restore a received bitstring. For example, when following the OFDM scheme, during data transmission, the baseband processor 1020 may encode and modulate a transmitted bitstring to generate complex symbols, may map the complex symbols to subcarriers, and may configure OFDM symbols through IFFT operation and CP insertion. In addition, during data reception, the baseband processor 1020 may split a baseband signal provided from the RF processor 1010 at the OFDM symbol level, may restore signals mapped to subcarriers through FFT operation, and may restore a received bitstring through demodulation and decoding. The baseband processor 1020 and the RF processor 1010 transmit and receive signals as described above. Therefore, the baseband processor 1020 and the RF processor 1010 may be referred to as a transmitter, a receiver, a transceiver, or a communication unit.

The backhaul communication unit 1030 provides an interface for communicating with other nodes in the network. That is, the backhaul communication unit 1030 converts bitstrings transmitted from the main base station to other nodes, for example, an auxiliary base station, a core network, etc., into physical signals, and converts physical signals received from the other nodes into bitstrings.

The storage 1040 stores basic programs, application programs, and data, such as configuration information, for operation of the main base station. Particularly, the storage 1040 may store information regarding a bearer allocated to a connected UE, a measurement result reported from the connected UE, and the like. In addition, the storage 1040 may store information serving as a reference to determine whether to provide multi-connection to a UE or to suspend the same. In addition, the storage 1040 provides the stored data at the request of the controller 1050.

The controller 1050 controls the overall operation of the main base station. For example, the controller 1050 transmits/receives signals through the baseband processor 1020 and the RF processor 1010 or through the backhaul communication unit 1030. In addition, the controller 1050 records data in the storage 1040 and reads the data from the storage 1040. To this end, the controller 1050 may include at least one processor. The controller 1050 may further include a multi-connection processor 1052 to support multiple connections.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

For example, it will be apparent that all or a part of a particular embodiment may be combined with all or a part of one or more other embodiments, which also falls within the embodiments of the disclosure.

## Claims

1. A method performed by a terminal in a wireless communication system, the method comprising:
receiving, from a base station, measurement configuration information including first information for configuring a plurality of measurement objects and second information for configuring reporting of a measurement object list; and
transmitting, to the base station, the measurement object list including one or more measurement objects for which measurement has been performed among the plurality of measurement objects,
wherein the measurement object list comprises cell information regarding cells in which measurement has been performed for each of the one or more measurement objects.

2. The method of claim 1, wherein the cell information comprises information on a predetermined number of cells in order from the best to worst measurement results for each of the measurement objects, and
wherein the predetermined number is a preconfigured fixed value or is configured by the base station.

3. The method of claim 1, wherein the measurement object list further comprises information on measurement objects for which measurement has not been performed among the multiple measurement objects.

4. The method of claim 1, wherein the one or more measurement objects comprise at least one cell having a measurement result exceeding a threshold value configured for reporting.

5. A method performed by a base station in a wireless communication system, the method comprising:
transmitting, to a terminal, measurement configuration information including first information for configuring a plurality of measurement objects and second information for configuring reporting of a measurement object list; and
receiving, from the terminal, the measurement object list including one or more measurement objects for which measurement has been performed among the plurality of measurement objects,
wherein the measurement object list comprises cell information regarding cells in which measurement has been performed for each of the one or more measurement objects.

6. The method of claim 5, wherein the cell information comprises information on a predetermined number of cells in order from the best to worst measurement results for each of the measurement objects, and
wherein the predetermined number is a preconfigured fixed value or is configured by the base station.

7. The method of claim 5, wherein the measurement object list further comprises information on measurement objects for which measurement has not been performed among the multiple measurement objects, and
wherein the one or more measurement objects comprise at least one cell having a measurement result exceeding a threshold value configured for reporting.

8. A terminal in a wireless communication system, the terminal comprising:
a transceiver; and
a controller connected to the transceiver,
wherein the controller is configured to:
receive, from a base station, measurement configuration information including first information for configuring a plurality of measurement objects and second information for configuring reporting of a measurement object list; and
transmit, to the base station, the measurement object list including one or more measurement objects for which measurement has been performed among the plurality of measurement objects, and
wherein the measurement object list comprises cell information regarding cells in which measurement has been performed for each of the one or more measurement objects.

9. The terminal of claim 8, wherein the cell information comprises information on a predetermined number of cells in order from the best to worst measurement results for each of the measurement objects, and
wherein the predetermined number is a preconfigured fixed value or is configured by the base station.

10. The terminal of claim 8, wherein the measurement object list further comprises information on measurement objects for which measurement has not been performed among the multiple measurement objects.

11. The terminal of claim 8, wherein the one or more measurement objects comprise at least one cell having a measurement result exceeding a threshold value configured for reporting.

12. A base station in a wireless communication system, the base station comprising:
a transceiver; and
a controller connected to the transceiver,
wherein the controller is configured to:
transmit, to a terminal, measurement configuration information including first information for configuring a plurality of measurement objects and second information for configuring reporting of a measurement object list; and
receive, from the terminal, the measurement object list including one or more measurement objects for which measurement has been performed among the plurality of measurement objects, and
wherein the measurement object list comprises cell information regarding cells in which measurement has been performed for each of the one or more measurement objects.

13. The base station of claim 12, wherein the cell information comprises information on a predetermined number of cells in order from the best to worst measurement results for each of the measurement objects, and
wherein the predetermined number is a preconfigured fixed value or is configured by the base station.

14. The base station of claim 12, wherein the measurement object list further comprises information on measurement objects for which measurement has not been performed among the multiple measurement objects.

15. The base station of claim 12, wherein the one or more measurement objects comprise at least one cell having a measurement result exceeding a threshold value configured for reporting.
